# EUROPEAN PATENT SPECIFICATION

(11) **EP 3 925 190 B1**
(45) Date of publication and mention of the grant of the patent: **12.07.2023**
(21) Application number: 20779833.1
(22) Date of filing: 23.03.2020
(51) Int. Cl.: H04L 47/80, H04L 45/64

(54) **COMPUTER-IMPLEMENTED METHODS AND COMPUTER PROGRAM PERFORMING METHODS FOR PROVIDING TRANSPORT CONTEXT AND ON-PATH META DATA TO SUPPORT 5G ENABLED NETWORKS**
COMPUTERIMPLEMENTIERTE VERFAHREN UND VERFAHREN ZUR DURCHFÜHRUNG VON COMPUTERPROGRAMMEN ZUR BEREITSTELLUNG VON TRANSPORTKONTEXT UND ON-PATH-METADATEN ZUR UNTERSTÜTZUNG 5G-FÄHIGER NETZWERKE
PROCÉDÉS MISE EN OEUVRE PAR ORDINATEUR ET PROCÉDÉS D'EXÉCUTION DE PROGRAMME INFORMATIQUE POUR FOURNIR UN CONTEXTE DE TRANSPORT ET DES MÉTADONNÉS SUR LE CHEMINEMENT POUR SUPPORTER DES RÉSEAUX PERMETTANT LA 5G

(30) Priority: 22.03.2019 US 201962822626 P
(43) Date of publication of application: 22.12.2021
(73) Proprietor: Huawei Technologies Co., Ltd., Shenzhen, Guangdong 518129 (CN)
(72) Inventor: JOHN, Kaippallimalil Mathew, Shenzhen, Guangdong 518129 (CN); LEE, Young, Shenzhen, Guangdong 518129 (CN); GUICHARD, James N, Shenzhen, Guangdong 518129 (CN)
(74) Representative: Maiwald GmbH
(86) International application number: PCT/CN2020/080680
(87) International publication number: WO 2020/192630

(56) References cited:
- EP-A1- 2 985 951
- WO-A1-03/034670
- WO-A1-2017/200978
- CN-A- 101 099 342
- CN-A- 107 005 556
- US-B1- 9 246 801
- U Chunduri , J Tantsura: "Transport Network aware Mobility for 5G draft-clt-dmm-tn-aware-mobility-00", DMM Working Group Internet draft, 15 July 2019 (2019-07-15), pages 1-19, XP015127670,

## Description

### TECHNICAL FIELD

The present disclosure relates generally to wireless communications, and, in particular to computer-implemented methods and a computer program to perform computer-implemented methods of providing transport context and on-path meta data to support 5G enabled networks.

### BACKGROUND

EP2985951A1 describes that a controller provisions services for transporting packet flows within a network. It is described that a controller service provisioning module receives a service request that comprises a definition for a service to be provided by the network for a subscriber or a customer of the network. It is described that the service provisioning module determines a plurality of network resources of at least one network device to be configured to implement the service in the network and apply the service to the packet-based network traffic of the subscriber. It is described that a locking unit of the service provisioning module acquires a lock from a network-wide coordination repository that stores a software representation for each of the network resources, the lock providing exclusive configuration access to the service provisioning module for the network resources. It is described that the service provisioning module, only upon the locking unit acquiring the lock for the network resources, configures the network resources to provision the service.

Traffic engineered (TE) mobile network backhauls use provisioning based on, more or less, static engineering estimates. These estimates may be changed, and traffic engineering may be configured periodically based on demand and other performance criteria. However, such a traffic engineering process may take a long time (e.g., on the order of weeks or months), and thus may not be suitable for networks having dynamically changing contexts, such as the fifth generation (5G) mobile networks. It is desirable to provide dynamically traffic engineered paths in backhaul networks to meet the need of changing traffic demands.

### SUMMARY

The invention is defined by the appended independent claims. Claim 1 defines a computer-implemented method. Claim 8 defines a computer-implemented method. Claim 13 defines a computer program product. The following aspects and options of the disclosure provide the skilled person with examples of how technical subject matters can be combined one with the other.

According to one aspect of the present disclosure, there is provided a computer-implemented method that includes: determining, by a first controller function of a first customer network, a plurality of multi-transport network context-identifiers (MTNC-IDs), each MTNC-ID corresponding to a forwarding path, and being associated with a set of resource provisioning requirements for one or more transport networks on the forwarding path to provision transport resources for traffic forwarding on the forwarding path, wherein the forwarding path spans between two data plane network functions, and wherein the set of resource provisioning requirements comprises a class of service (CoS), a set of quality of service (QoS) requirements, and an isolation requirement, sending, by the first controller function of the first customer network, a first MTNC-ID of the plurality of MTNC-IDs corresponding to a first forwarding path to a transport controller function of each of one or more transport networks on the first forwarding path, for the transport controller function to associate the first MTNC-ID with one or more transport paths configured in a respective transport network, and sending, by the controller function of the first customer network, the first MTNC-ID of the plurality of MTNC-IDs corresponding to the first forwarding path to a session management function (SMF) of the first customer network, the first forwarding path spanning between two data plane network functions that are managed by the SMF, where determining the plurality of MTNC-IDs comprises:determining a MTNC-ID based on traffic demand estimates between the first customer network and a second customer network receiving traffic forwarded on the forwarding path, and based on the set of resource provisioning requirements associated with the MTNC-ID; and further comprising:collecting, by the first controller function of the first customer network, data regarding traffic communicated between the first customer network and the second customer network through one or more transport networks.

The above computer-implemented method generates a MTNC-ID that may be used across multiple transport networks and multiple domains, such as across a mobile network and a transport network, on a forwarding path, such that each transport network provisions transport resources according to the MTNC-ID. The MTNC-ID facilitates routing of data packets by each of the transport networks on the forwarding path, and provides flexibility for each transport network to provide routing services based on dynamically varying resource provisioning requirements. The method further facilitates transmission of data packets on the forwarding path, which may be forwarded using an agreed level of service that is identified by a MTNC-ID carried in the data packets.

Optionally, in any one of the preceding aspects, the first customer network is a mobile network.

Optionally, in any one of the preceding aspects, the first customer network is an edge computing network.

Optionally, in any one of the preceding aspects, the first customer network is a radio access network or a mobile core.

Optionally, in any one of the preceding aspects, the transport controller function of a transport network is a software defined network-controller (SDN-C) of the transport network.

In any one of the preceding aspects, one of the one or more transport networks on the first forwarding path is a transport network within the first customer network, and is configured to forward traffic within the first customer network.

In any one of the preceding aspects, the forwarding path is configured to forward traffic transmitted from the first customer network to a second customer network.

In any one of the preceding aspects, determining the plurality of MTNC-IDs comprises: selecting, by the first controller function of the first customer network, a unique MTNC-ID from available MTNC-IDs with a third controller function of a second customer network and a second controller function of a transport network, the unique MTNC-ID corresponding to a forwarding path including the transport network.

In any one of the preceding aspects, the computer-implemented method further includes: receiving, by the first controller function of the first customer network from the SMF of the first customer network, a request requesting the first MTNC-ID for data packet transmissions on the first forwarding path.

In any one of the preceding aspects, each of the plurality of MTNC-IDs is unique for a corresponding forwarding path and an associated set of resource provisioning requirements.

In any one of the preceding aspects, the computer-implemented method further includes: updating, by the first controller function of the first customer network, the plurality of MTNC-IDs continuously.

According to another aspect of the present disclosure, there is provided a computer-implemented method that includes: receiving, by a first controller function of a transport network on a forwarding path from a second controller function of a first customer network, a multi-transport network context-identifier (MTNC-ID), the MTNC-ID corresponding to the forwarding path, and being associated with a set of resource provisioning requirements according to which transport resources of each of one or more transport networks on the forwarding path are provisioned for forwarding traffic on the forwarding path, wherein the set of resource provisioning requirements comprises a class of service (CoS), a set of quality of service (QoS) requirements, and an isolation requirement, associating, by the first controller function of the transport network, the MTNC-ID with a transport path that has been configured in the transport network according to the set of resource provisioning requirements associated with the MTNC-ID, and programming, by the first controller function of the transport network, routers of the transport network with the MTNC-ID such that each router is able to route, according to an associated transport path of the MTNC-ID, data packets having the MTNC-ID, where the MTNC-ID was determined based on traffic demand estimates between the first customer network and a second customer network forwarding traffic forwarded on the forwarding path, and based on the set of resource provisioning requirements associated with the MTNC-ID; and further comprising:collecting, by the first controller function of the first customer network, data regarding traffic communicated between the first customer network and the second customer network through one or more transport networks.

The computer-implemented method receives a MTNC-ID that may be used across multiple transport networks and multiple domains, such as across a mobile network and a transport network, on a forwarding path, such that each transport network provisions transport resources according to the MTNC-ID. The method facilitates routing of data packets by each of the transport networks on the forwarding path, and provide flexibility for each transport network to provide routing services based on dynamically varying resource provisioning requirements that are indicated by MTNC-ID.

In any one of the preceding aspects, the computer-implemented method further includes: receiving, by the first controller function of the transport network, update information of the MTNC-ID.

In any one of the preceding aspects, the first controller function of the transport network is a software defined network-controller (SDN-C) of the transport network.

Optionally, in any one of the preceding aspects, the first customer network is a mobile network.

Optionally, in any one of the preceding aspects, the first customer network is an edge computing network.

In any one of the preceding aspects, the first customer network is a radio access network or a mobile core.

According to another non-claimed aspect of the present disclosure, there is provided a computer-implemented method that includes: receiving, by an edge router of a transport network on a forwarding path from a first customer network, a data packet comprising a multi-transport network context-identifier (MTNC-ID), the MTNC-ID corresponding to the forwarding path and being associated with a set of resource provisioning requirements according to which transport resources of each of one or more transport network on the forwarding path are provisioned for forwarding the data packet on the forwarding path, wherein the set of resource provisioning requirements comprises a class of service (CoS), a set of quality of service (QoS) requirements, and a set of transport path configuration constraints, determining, by the edge router of the transport network, a transport path configured in the transport network according to the set of resource provisioning requirements associated with the MTNC-ID, and routing, by the edge router of the transport network, the data packet on the transport path.

The method facilitates routing of a data packet by the transport networks on the forwarding path by use of the MTNC-ID carried in the data packet, and provide flexibility for the transport network to routing data packets based on dynamically varying resource provisioning requirements that are associated with MTNC-IDs.

Optionally, in any one of the preceding aspects, the MTNC-ID is comprised in an IPv6 flow label of the data packet.

Optionally, in any one of the preceding aspects, the MTNC-ID is comprised in a meta data filed of a network service header (NSH) of the data packet.

Optionally, in any one of the preceding aspects, the MTNC-ID is comprised in a general packet radio services (GPRS) tunneling protocol (GTP) header of the data packet.

Optionally, in any one of the preceding aspects, the MTNC-ID is comprised in a next extension header field.

Optionally, in any one of the preceding aspects, the data packet further comprises a traffic class field indicating a level of service that maps the set of resource provisioning requirements, and a transport type field indicating a transport data plane technology of the transport network for routing traffic.

Optionally, in any one of the preceding aspects, the transport data plane technology comprises multiprotocol label switching (MPLS), segment routing (SR), SR over IPv6 data plane (SRV6), layer 1 (optical transport network (OTN)), or layer o (wavelength division multiplexing (WDM)) optical data planes.

According to another non-claimed aspect of the present disclosure, there is provided a computer-implemented method that includes: requesting, by a session management function (SMF) of a first customer network from a controller function of the first customer network, a list of multi-transport network context-identifiers (MTNC-IDs), each MTNC-ID corresponding to a forwarding path that spans between two data plane network functions managed by the SMF, and each MTNC-ID being associated with a set of resource provisioning requirements according to which transport resources of each of one or more transport networks on the forwarding path are provisioned for forwarding traffic on the forwarding path, wherein the set of resource provisioning requirements comprises a class of service (CoS), a set of quality of service (QoS) requirements, and an isolation requirement, selecting, by the SMF in response to a session establishment request initiated by a user equipment (UE) for a service, a MTNC-ID from the list of MTNC-IDs corresponding to a first forwarding path based on the set of resource provisioning requirements associated with the MTNC-ID and the session establishment request, and configuring, by the SMF, a first data plane network function of the first forwarding path with the selected MTNC-ID for the first data plane network function to associate the MTNC-ID with data packets transmitted for the service.

The above computer-implemented method facilitates transmission of data packets on a forwarding path, which may be forwarded using an agreed level of service that is identified by a MTNC-ID of the data packets.

Optionally, in any one of the preceding aspects, the first customer network is a mobile network.

Optionally, in any one of the preceding aspects, the first customer network is an edge computing network.

Optionally, in any one of the preceding aspects, the first customer network is a radio access network.

Optionally, in any one of the preceding aspects, the first customer network is a mobile core.

Optionally, in any one of the preceding aspects, requesting the list of MTNC-IDs comprises: subscribing, by the SMF from the controller function of the first customer network, the list of MTNC-IDs.

According to another non-claimed aspect of the present disclosure, there is provided a computer-implemented method that includes: receiving, by a first data plane network function of a first customer network configured for a user session, a multi-transport network context-identifier (MTNC-ID), the MTNC-ID corresponding to a forwarding path between the first data plane network function and a second data plane network function, and being associated with a set of resource provisioning requirements according to which transport resources of each of one or more transport networks on the forwarding path are provisioned for forwarding traffic on the forwarding path, wherein the set of resource provisioning requirements comprises a class of service (CoS), a set of quality of service (QoS) requirements, and an isolation requirement, adding, by the first data plane network function, the MTNC-ID into a data packet of the user session, and transmitting, by the first data plane network function, the data packet with the MTNC-ID on the forwarding path.

The above computer-implemented method facilitates transmission of data packets on the forwarding path, which may be forwarded using an agreed level of service that is identified by a MTNC-ID carried in the data packets.

Optionally, in any one of the preceding aspects, the first customer network is a mobile network.

Optionally, in any one of the preceding aspects, the first customer network is an edge computing network.

Optionally, in any one of the preceding aspects, the first customer network is a radio access network or a mobile core.

Optionally, in any one of the preceding aspects, the second data plane network function belongs to a second customer network different than the first customer network.

Optionally, in any one of the preceding aspects, the first data plane network function is a gNB and the second data plane network function is a user plane function (UPF).

Optionally, in any one of the preceding aspects, the first data plane network function is a UPF of the first customer network, and the second data plane network function is a UPF of a second customer network.

Optionally, in any one of the preceding aspects, the first data plane network function is a UPF of the first customer network, and the second data plane network function is an application server of a second customer network.

Optionally, in any one of the preceding aspects, one of the one or more transport networks is a transport network within the first customer network, and is configured to forward traffic within the first customer network.

Optionally, in any one of the preceding aspects, the MTNC-ID is comprised in an IPv6 flow label field of the data packet.

Optionally, in any one of the preceding aspects, the MTNC-ID is comprised in a meta data filed of a network service header (NSH) of the data packet.

Optionally, in any one of the preceding aspects, the MTNC-ID is comprised in a general packet radio services (GPRS) tunneling protocol (GTP) header of the data packet.

Optionally, in any one of the preceding aspects, the MTNC-ID is comprised in a next extension header field of the data packet.

Optionally, in any one of the preceding aspects, the data packet further comprises a traffic class field indicating a level of service that maps the set of resource provisioning requirements, and a transport type field indicating a transport data plane technology of a transport network on the forwarding path for routing traffic.

Optionally, in any one of the preceding aspects, the transport data plane technology comprises multiprotocol label switching (MPLS), segment routing (SR), SR over IPv6 data plane (SRV6), layer 1 (OTN), or layer o (WDM) optical data planes.

According to another non-claimed aspect of the present disclosure, there is provided an apparatus that includes: a non-transitory storage medium storing instructions, and one or more processors in communication with the storage medium, wherein the one or more processors execute the instructions to perform the computer-implemented method as recited in any one of preceding aspects.

According to another non-claimed aspect of the present disclosure, there is provided a non-transitory computer-readable media storing computer instructions, that when executed by one or more processors, cause the one or more processors to perform the computer-implemented method as recited in any one of preceding aspects.

### BRIEF DESCRIPTION OF THE DRAWINGS

For a more complete understanding of the present invention, and the advantages thereof, reference is now made to the following descriptions taken in conjunction with the accompanying drawings, in which:
FIG. 1 illustrates a diagram of an embodiment wireless communications network;
FIG. 2 illustrates a diagram showing Third Generation Partnership Project (3GPP) control plane functions for setting up user plane connections;
FIG. 3 illustrates a diagram of an embodiment communications system highlighting transport networks used for forwarding traffic between mobile networks;
FIG. 4 illustrates a diagram of an embodiment communications system highlighting transport segments;
FIG. 5 illustrates a diagram showing embodiment communications between control plane functions, highlighting setup of multi-transport network context-identifiers (MTNC-IDs) in the control plane;
FIG. 6 illustrates a diagram of an embodiment communications system highlighting a MTNC-ID configured across multiple transport networks;
FIG. 7 illustrates a diagram showing embodiment communications for obtaining explicit route lists;
FIG. 8 illustrates a diagram of an information element (IE) including explicit transport context;
FIG. 9 illustrates a diagram showing embodiment communications for obtaining implicit route context;
FIG. 10 illustrates a diagram of embodiment implicit transport context;
FIG. 11 illustrates a diagram of an embodiment data packet;
FIG. 12 illustrates a diagram of another embodiment data packet;
FIG. 13 illustrates a diagram of an embodiment communications system;
FIG. 14 illustrates a diagram of an embodiment data packet transmitted between user plane functions (UPFs);
FIG. 15 illustrates a diagram of an embodiment data packet transmitted between a gNB and a UPF;
FIG. 16 illustrates a diagram showing embodiment operations for encoding transport context in a GTP-U header;
FIG. 17 illustrates a flowchart of an embodiment method for wireless communications;
FIG. 18 illustrates a flowchart of another embodiment method for wireless communications;
FIG. 19 illustrates a flowchart of another embodiment method for wireless communications;
FIG. 20 illustrates a flowchart of another embodiment method for wireless communications;
FIG. 21 illustrates a flowchart of another embodiment method for wireless communications;
FIG. 22 illustrates a block diagram of an embodiment processing system; and
FIG. 23 illustrates a block diagram of an embodiment transceiver.

### DETAILED DESCRIPTION OF ILLUSTRATIVE EMBODIMENTS

The structure, manufacture and use of the presently preferred embodiments are discussed in detail below. It should be appreciated, however, that the present disclosure provides many applicable novel concepts that can be embodied in a wide variety of specific contexts. The specific embodiments discussed are merely illustrative of specific ways to make and use the embodiments, and do not limit the scope of the disclosure.

Network services requested by users are often associated with requirements, e.g., quality of service (QoS) requirements, which need to be met so that the users may receive certain levels of service contracted. Transport networks that are configured to provide transport services also need to provision transport resources according to these requirements for forwarding traffic.

Embodiments of the present disclosure provide methods that determine, distribute and apply multi-transport network context-identifiers (MTNC-IDs) for traffic transmission, based on which transport networks may provide contract bound services according to transport context that is identified by the MTNC-IDs. Each MTNC-ID may correspond to one forwarding path between two data plane network functions, e.g., user plane functions (UPFs). The forwarding path may include one or more transport networks configured for forwarding traffic on the forwarding path. Each MTNC-ID is associated with a set of resource provisioning requirements, such as quality of service (QoS) requirements, class of service (CoS), a resilience requirement, and/or an isolation requirement, according to which transport resources of each of one or more transport networks on the forwarding path are provisioned for routing traffic on the forwarding path.

A MTNC-ID corresponding to a forwarding path may be sent to a session management function, which may configure a UPF in a user session with the MTNC-ID so that the UPF associates the MTNC-ID with data packets to be forwarded on the forwarding path. The MTNC-ID may also be sent to one or more transport networks on the forwarding path, where routers of each transport network may be programmed so that traffic associated with the MTNC-ID may be routed according to the MTNC-ID.

Each MTNC-ID is created uniquely for a corresponding forwarding path, and may be used across multiple transport networks and multiple domains, such as across a mobile network and a transport network, on a corresponding forwarding path. The embodiments facilitate routing of data packets by each of the transport networks on a forwarding path, and provide flexibility for each transport network to provide routing services based on dynamically varying resource provisioning requirements. The embodiments further facilitate transmission of data packets on a forwarding path, which may be forwarded using an agreed level of service that is identified by a MTNC-ID carried in the data packets. Details will be provided in the following.

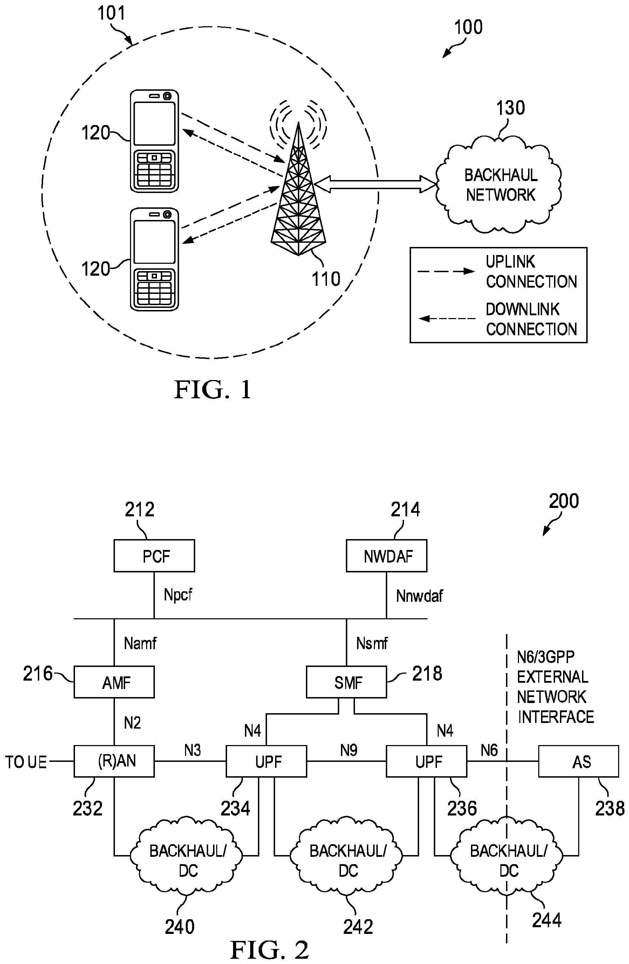

FIG. 1 illustrates a network 100 for communicating data. The network 100 comprises a base station 110 having a coverage area 101, a plurality of mobile devices 120, and a backhaul network 130. As shown, the base station 110 establishes uplink (dashed line) and/or downlink (dotted line) connections with the mobile devices 120, which serve to carry data from the mobile devices 120 to the base station 110 and vice-versa. Data carried over the uplink/downlink connections may include data communicated between the mobile devices 120, as well as data communicated to/from a remote-end (not shown) by way of the backhaul network 130. As used herein, the term "base station" refers to any component (or collection of components) configured to provide wireless access to a network, such as an enhanced base station (eNB), a next generation gigabit NodeB (gNB), a transmit/receive point (TRP), a macro-cell, a femtocell, a Wi-Fi access point (AP), or other wirelessly enabled devices. Base stations may provide wireless access in accordance with one or more wireless communication protocols, e.g., long term evolution (LTE), LTE advanced (LTE-A), High Speed Packet Access (HSPA), Wi-Fi 802.11a/b/g/n/ac, etc. As used herein, the term "mobile device" refers to any component (or collection of components) capable of establishing a wireless connection with a base station, such as a user equipment (UE), a mobile station (STA), and other wirelessly enabled devices. In some embodiments, the network 100 may comprise various other wireless devices, such as relays, low power nodes, etc.

FIG. 2 illustrates a diagram 200 showing Third Generation Partnership Project (3GPP) control plane functions for setting up user plane connections. Specifically, FIG. 2 illustrates 3GPP control plane functions (e.g., a access and mobility management function (AMF), a session management function (SMF), etc.) that provide access and session handling capabilities for setting up user plane connections across an interface N3 (for a communication segment between a radio access network (RAN) and a user plane Function (UPF)), across an interface N9 (for a segment between UPFs), and across an interface N6 (for a segment between a UPF and an edge network and/or other external destinations).

The control plane functions shown in FIG. 2 includes a policy control function (PCF) 212, a network data analysis function (NWDAF) 214, an access and mobility management function (AMF) 216 and a session management function (SMF) 218. 3GPP specifications, including Technical Specification (TS) 23.501 and TS 23.502, describe these control plane and user plane functions in detail. For example, the SMF 218 is responsible for handling individual user sessions, in particular, IP addresses, routing and mobility. The SMF 218 provisions user sessions subject to network and subscription policy as defined in the PCF 212. The NWDAF 214 is responsible for network data analysis, i.e., analysis on data from various 3GPP network functions (NFs). The AMF 216 is responsible for handling connection and mobility management.

Each of the control plane functions communicate with other functions through their specific interfaces. For example, the PCF 212 communicates via an interface Npcf, the NWDAF 214 communicates via an interface Nnwdaf, the AMF 216 communicates via an interface Namf, and the SMF 218 communicates via an interface Nsmf.

In the user plane, UEs may access a (R)AN 232 for wireless communication, and traffic may be routed between the (R)AN 232 and a UPF 234 via N3, between the UPF 234 and a UPF 236 via N9, and between the UPF 236 and an application server (AS) 238 via N6. The interface between the UPF 236 and the AS 238 may be N6 or a 3GPP external network interface.

The end-to-end connections for those interfaces, i.e., N3, N9 and N6, may traverse a backhaul network or a data center (DC) network. For example, the connection over N3 traverses a backhaul/DC network 240, the connection over N9 traverses backhaul/DC network 242, and the connection over N6 traverses a backhaul/DC network 244. Each of the backhaul or DC network may be referred to as a transport network, and traffic are routed or transported through a transport network corresponding to an interface. The corresponding transport underlay for these interfaces N3, N6 and N9 may need to be traffic engineered to support various 5G use cases. For example, to satisfy requirements such as low latency, and high reliability for data flows, as well as the ability to support dynamically varying demands on network capacity, software defined network (SDN)-controllers (SDN-Cs) in the transport domain may need to get requests from a 3GPP system and provide the path capabilities requested.

Conventionally, mobile network backhauls use static configuration and provisioning of routers for traffic engineering (TE), where traffic engineering is configured periodically (e.g., weekly or monthly) based on demand and other performance criteria. The backhauls provide statically traffic engineered paths for forwarding traffic.

However, in 5G systems with a large range of services, low latency paths and mobility, the demand estimate varies much more dynamically (e.g., in the order of several minutes in the worst cases). Thus, backhaul networks that provide capabilities to reprogram routers and switches to meet the dynamically changing traffic demand profiles are desirable.

Further, the base capability found in Internet Engineering Task Force (IETF) Abstraction and Control of Traffic Engineered Networks (ACTN) has been applied in 3GPP mobile networks. The IETF ACTN capabilities in the transport underlay may interact with a mobile network controller to know how to program the routes based on traffic demand information, slices, quality of service (QoS), and network policies. A network policy (or a traffic engineering (TE) policy) may specify packet data network (PDN) session establishment and detach information for each transport path, traffic routing and re-routing information derived from performance data, etc. In return, the 3GPP mobile network may require dynamic feedback from the underlay transport network to recalculate projected demand for TE paths on a continuous basis.

It is desirable that the backhaul and DC networks may support or provide dynamically traffic engineered paths (i.e., transport paths) to accommodate dynamically varying traffic demand, as well as other requirements, such as latencies (including both deterministic latency and non-deterministic latency), jitter (in case of non-deterministic latency), bandwidths, and protection levels. These paths may be set up for data plane as well as control plane traffic. It is also desirable that the backhaul and DC networks may support or provide provision of dynamic paths on per slice and per QoS class basis, provide feedback (or monitoring) information of these paths from the transport network underlay, and provide capabilities for configuring these paths across more than one administrative domain.

In addition to the configuration and provisioning of traffic engineered paths between mobile and transport network providers, there is a question of how to enforce policies for slices and QoS across multiple network segments in mobile networks and transport networks and across the mobile networks and transport networks. The policies herein may be generally referred to as a set of requirements or constraints that is to be met in order to provide a level of service.

One answer is to carry policy related information in data packets so that a policy may be implemented. Slices and QoS classes in the service domain generally do not have a 1:1 correspondence between the 3GPP domain and the transport domain. It is thus desirable to carry meta data or tokens in data packets, which need specific treatment in the transport domain, to associate with information provisioned across the 3GPP and transport domains. The meta data that is carried in a data packet (e.g., the data packet header) may be desirably at the granularity of the provisioning for services between the 3GPP and transport domains. Specifically, the services are provided in the transport domain, and the meta data is used in the transport domain to classify data packets. Based on the classification, services agreed to are provided. It is further desirable to provide protocol extensions to carry the policy meta-data across connection segments between 3GPP functions (e.g., N3, N9) and also across 3GPP - to external system (e.g., N6, to an application server).

Embodiments of the present disclosure provide methods for determining, distributing and applying multi-transport network context-identifiers (MTNC-IDs) for data packets, based on which transport networks provide contract bound services according to transport network context or transport context that is identified by the MTNC-IDs. The terms of "transport network context" and "transport context" are used interchangeably throughout the disclosure. Each MTNC-ID may correspond to one forwarding path between two data plane network functions, e.g., UPFs. The forwarding path may include one or more transport networks configured for forwarding traffic on the forwarding path. In one embodiment, the transport network context identified by a MTNC-ID corresponding to a forwarding path may include a set of requirements, such as quality of service (QoS) requirements, class of service (CoS), a resilience requirement, and/or an isolation requirement, according to which transport resources of each of one or more transport networks on the forwarding path are provisioned for routing traffic on the forwarding path. Thus, the set of requirements may also be referred to as a set of transport resource provisioning requirements, which tells a transport what transport resources are to be provisioned for traffic routing. The MTNC-ID is associated with or indicates the set of transport resource provisioning requirements.

In the following embodiments, traffic is transmitted over an end-to-end transmission path from a source network (or a source site) to a destination network (or a destination site). The source network and the destination network are referred to as customer networks (at different sites). Communication of traffic between the customer networks (or two sites) may be through one or more backhaul networks or data centers (DC)s. Thus, traffic is routed from the source network to the destination network through the one or more backhaul networks or DCs. The backhaul networks or DCs for routing traffic between two customer networks may be referred to as transport networks. In one example, a customer network may be a mobile network, or an edge computing network. In another example, one of the source network and the destination network is a radio access network, and the other one is a mobile core. The following embodiments use 3GPP mobile networks as examples for merely illustrative purposes. Other networks may also be applicable, such as a content delivery network (CDN) or a DC network, without departing the principle of the present disclosure.

In the following embodiments, traffic communicated between the customer networks through a transport network may also be referred to as being communicated across different domains (or across different sites). The source network, destination network and the transport network may be viewed as being associated with different domains. In an illustrative example, where the two customer networks may be two different 3GPP mobile networks, the 3GPP mobile networks are associated with 3GPP domains, and the transport network is associated with a transport domain. Thus, in this example, traffic is communicated across 3GPP domains and a transport domain. The mobile networks may also be viewed as being associated with application domains.

Network slicing divides a network service onto many parallel network slice instances and distributes functions of each slice instance as independent units based on network conditions and service requirements. Network slicing may allow multiple virtual networks to be created on top of a common shared physical infrastructure, and the virtual networks may then be customized to meet specific needs of applications, services, devices, customers or operators. For example, in the case of 5G, a single physical network may be sliced into multiple virtual networks that may support different radio access networks (RANs), or different service types running across a single RAN.

According to Global System for Mobile Communication Association (GSMA), "[a] network slice is a logical network that provides specific network capabilities and characteristics in order to serve a defined business purpose of a customer. Network slicing allows multiple virtual networks to be created on top of a common shared physical infrastructure. A network slice consists of different subnets, example: Radio Access Network (RAN) subnet, Core Network (CN) subnet, Transport network subnet." (GSMA, "Network Slicing Use Case Requirements", April 2018, page 13. See https://www.gsma.com/futurenetworks/wp-content/uploads/2018/04/NS-Final.pdf.) A "subnet" in this definition may correspond to a slice segment together with isolation for compute and storage in the embodiments.

IETF RFC 8453, section 2.1, also provide a definition of slice in the context of transport networks and ACTN, "[i]n the context of ACTN, a TE network slice is a collection of resources that is used to establish a logically dedicated virtual network over one or more TE networks. TE network slicing allows a network operator to provide dedicated virtual networks for applications/customers over a common network infrastructure. The logically dedicated resources are a part of the larger common network infrastructures that are shared among various TE network slice instances, which are the end-to-end realization of TE network slicing, consisting of the combination of physically or logically dedicated resources." (Ceccarelli and Lee, "Framework for Abstraction and Control of TE Networks (ACTN)", August 2018, section 2.1. See https://tools.ietf.org/html/rfc8453#section-2.1.)

A slice of a network may be associated with a set of resources of the network. For example, a 3GPP slice may be associated with a set of 3GPP network resources. A transport slice may be associated with a set of transport network resources. A transport network slice may correspond to QoS, CoS, resilience and isolation requirements. There may be multiple slice instances corresponding to a slice, and they may be dedicated or shared.

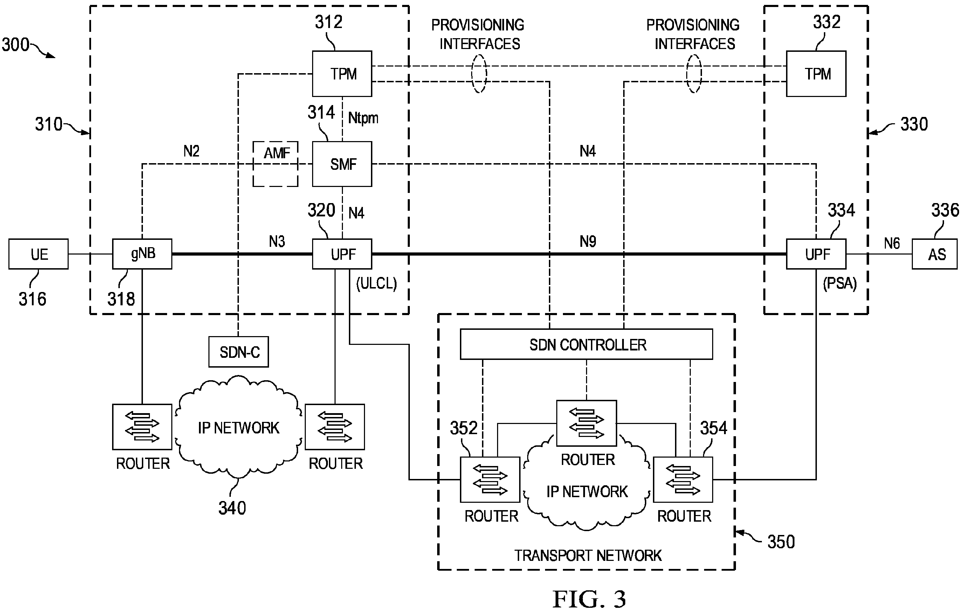

FIG. 3 illustrates a diagram of an embodiment communications system 300 highlighting transport networks used for forwarding traffic between a mobile network 310 and a mobile network 330. FIG. 3 shows the need for MTNC-IDs shared by the application (i.e., mobile network) domain and the transport domain.

In FIG. 3, mobile network functions are deployed across two sites (i.e., the mobile networks 310 and 330, referred to as Site 1, Site 2, respectively), and a transport network 350 in between. As shown, the mobile network 310 includes a transport path manager (TPM) 312, and a SMF 314. The mobile network 330 includes a transport path manager (TPM) 332. A UE 316 communicates with a gNB 328 in the mobile network 310. Traffic may be transmitted from the gNB 318 to a UPF 320 of the mobile network 310, routed by the transport network 350 on a path including PE routers 352 and 354, forwarded to a UPF 334 of the mobile network 330 and then to an application server 336. Communications between the UE 316 and the gNB 318 traverses a radio network. Communications between the gNB 318 and the UPF 320 is through the interface N3 traversing a transport network 340 (which is an IP network). Communications between the UPF 320 and the UPF 334 is through the interface N9 traversing a backhaul network (or a transport network) 350. Communication between the UPF 334 and the application server 336 is through the interface N6 that may traverse another data center (or a transport network). Each transport network includes a software defined network-controller (SDN-C) provisioning and managing routers. The path for communicating traffic between the UE 316 and the application server 336 may thus include multiple segments, i.e., a N3 segment, a N9 segment and a N6 segment.

A TPM is a control function of a customer network, and one TPM is configured per customer network (or site). A TPM of a network (e.g., a mobile network) may be configured to collect data, e.g., user session information, traffic volume, etc., regarding traffic demand of the network, collect topology information of a transport network that is used to forward traffic between the network and other networks, negotiate with a TPM of another network for traffic matrix, and collect performance data regarding transport paths of a transport network for routing traffic between the network and other networks through the transport network. The TPM may be configured to dynamically determine whether to request to configure a transport path in a transport network for routing traffic from the network to another network through the transport network, based on the collected data, estimates and/or requirements, such as QoS determined, demands estimated, traffic matrix negotiated, PE routers of the transport network that are determined, and one or more transport path configuration constraints.

3GPP TS 23.501 or 5G requires support for a number of service level guarantees for QoS, such as ultra-low latency, ultra-high reliability, and latency determinism to best effort. 3GPP UPFs classify and allocate resources for PDN connections and flows according to QoS levels and slice information. In the transport networks, resources have to be granted corresponding to the service level guarantees by the mobile network.

In FIG. 3, the N3 segment between the gNB 318 and the UPF 320 is over the transport network 340 at that site (i.e., Site 1, which may be a data center or a center office (DC/CO)). In the N9 segment, in the case as shown in FIG. 3, there are three transport segments (or paths), i.e., a transport segment at each mobile network site (Site 1, and Site 2), i.e., a transport segment from the UPF 320 to the router 352 of the transport network 350, and a transport segment from the router 354 to the UPF 334, and a transport (or backhaul) segment in between, i.e., a transport segment between the routers 352 and 354. In order for each transport network to provision transport resources to provide a service of an agreed level, what may need to be considered includes not only estimation of traffic and provisioning by TPMs and SDN controllers across the service and transport domains, but also provisioning of MTNC-IDs shared by the application (the mobile network) domain and the transport domain, where the MTNC-IDs indicate different service levels and/or slice information. The MTNC-IDs maybe per class of service (CoS) in the transport domain(s) that corresponds to a data plane segment like N3, N9.

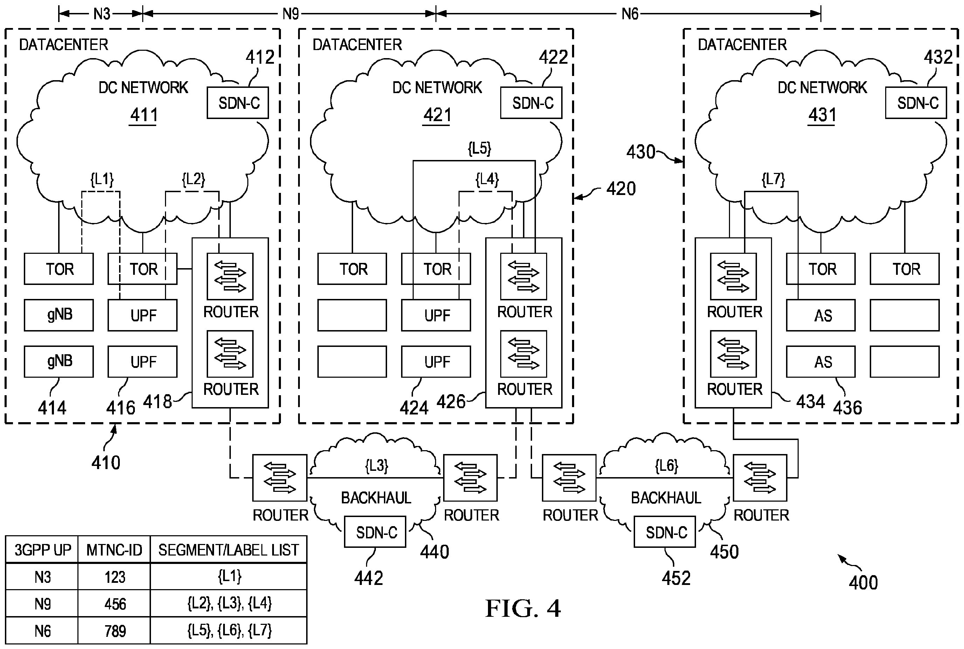

FIG. 4 illustrates a diagram of an embodiment communications system 400 highlighting transport segments. FIG. 4 shows the relationship between MTNC-IDs, 3GPP data plane segments and transport segments. In FIG. 4, service layer user plane segments (N3, N9, N6 segments) are located in different data centers interconnected by backhaul and data center transports, and there may be multiple connection segments per 3GPP data plane segment. For example, the N9 user plane segment may use multiple transport segments across data centers and/or backhaul transports. The transport segments may be represented by a list of labels or segment numbers, e.g., {L1}, {L2}, ... {L7}.

As shown, the communications system 400 includes a data center 410, a data center 420 and a data center 430. Each of the data centers may correspond to a customer network. The data centers include routers routing traffic in or out of the respective data centers, top of rack (TOR) and/or end of row (EOR) switches. The data center 410 includes gNBs 414 providing access services. A DC network 411 is provided in the data center 410 for forwarding traffic within the data center 410. A SDN-C 412 is configured to provision and manage routing for the DC network 411. Within the data center 410, traffic may be transmitted by a gNB 414 to one of UPFs 416 (i.e., segment {L1}), and forwarded from one of the UPFs 416 to one of the routers 418 (i.e., segment {L2}). Transport services for {L1} and {L2} are provided by the DC network (or transport network) 411 within the data center 410.

The data center 420 includes a DC network 421 for forwarding traffic within the data center 420. A SDN-C 422 is configured to provision and manage routing for the DC network 421. Within the data center 420, incoming traffic may be received and forwarded by one of routers 426 to one of UPFs 424 (i.e., segment {L4}), and outgoing traffic may be forwarded from one of the UPFs 424 to one of the routers 426 (i.e., segment {L5}). Transport services for {L4} and {L5} are provided by the DC network (or transport network) 421 within the data center 420.

The data center 430 includes a DC network 431 for forwarding traffic within the data center 430. A SDN-C 432 is configured to provision and manage routing for the DC network 431. Incoming traffic may be received by one of routers 434 and forwarded to one of application servers 436 (i.e., segment {L7}). Transport services for {L7} are provided by the DC network (or transport network) 431 within the data center 430.

Traffic transmitted from the data center 410 to the data center 420 may be transported by a backhaul network 440, e.g., in a segment {L3}. A SDN-C 442 is configured to provision and manage routing for the backhaul network 440. Traffic transmitted from the data center 420 to the data center 430 may be transported by a backhaul network 450, e.g., in a segment {L6}. A SDN-C 452 is configured to provision and manage routing for the backhaul network 450.

For traffic transmitted from a gNB 414 to an application server (AS) 436, the traffic may pass through transport segments {L1}, {L2}, ... {L7}. Services provided on each of the transport segments need to meet requirements of a level of service of a corresponding user plane segment, e.g., N3, or N9.

In some embodiments, MTNC-IDs are provided to indicate or identify the requirements. A MTNC-ID may identify MTNC or transport context for a user plane segment (e.g., N3 or N9), where transport resources of each transport segment along the user plane segment are provisioned according to the transport context. As discussed above, there may be one or more transport segments (consequently, one or more transport networks) corresponding to one user plane segment. For example, the N9 segment corresponds to transport segments {L2}, {L3} and {L4}. Thus, all the transport segments {L2}, {L3} and {L4} share one MTNC-ID of the corresponding user plane segment.

In the following, a user plane segment is referred to as a connection path between two service end points, i.e., two user plane network functions (e.g., between the gNB 414 and the UPF 416, between the UPFs 416 and 424, or between the UPF 424 and the AS 436). A connection path is established for a user session or a PDU session. For example, for transmitting traffic from the data center 410 to the data center 430, three connection paths are established, i.e., from the gNB 414 to the UPF 416, from the UPF 416 to the UPF 424, and from the UPF 424 to the AS 436. The connection path may exist for the duration of the user session. A connection path may include one or more transport segments. For example, the connection path from the gNB 414 to the UPF 416 includes transport segment {L1}. The connection path from the UPF 416 to the UPF 424 includes transport segments {L2}, {L3}, and {L4}. The connection path from the UPF 424 to the AS 436 includes transport segments {L5}, {L6}, and {L7}. A connection path may also be referred to as a forwarding path, or a connection segment in the following embodiments.

The MTNC identified by a MTNC-ID may include the requirements for a certain level of service. The requirements may include a class of service (CoS), a set of QoS requirements, such as a bandwidth, a latency, jitter, etc., a resilience requirement, such as a protection level (e.g., 1+1, 1+1+restoration, or shared protection, etc.), and/or an isolation requirement, such as hard isolation, soft isolation, or no isolation. Based on the requirements, a transport slice may be generated to provide routing services. The transport slice corresponds to resources provisioned/allocated according to the requirements associated with the MTNC-ID.

Class of service indicates classification of services into categories, so that traffic of the services is treated according to the classification. CoS may be associated with a set of QoS characteristics for a slice or service. For example, 3GPP TS 23.501, Release 15, section 5.7.4, shows mapping from a 5G QoS identifier (5QI) that maps CoS to QoS characteristics. For example, a 5QI value "1" corresponds to a set of QoS characteristics of 100ms packet delay budget, and a 2000ms averaging window. Hard isolation means that all transport resources (including resources in all layers, packet resources and/or optical resources) allocated for a virtual network connection (VNC) are dedicated for the VNC without sharing with another VNC. Soft isolation is generally the same as hard isolation except that optical resources may be shared with other VNCs. No isolation means that the VNC is permitted to share, with other VNCs, all transport resources.

A MTNC-ID is shared by the transport and the 3GPP (or mobile network) domains on e.g., per (connection) path, class of service and isolation basis. In the case that a connection path includes multiple transport segment across different domains (e.g., mobile network domains and transport domains), the same MTNC-ID is shared across the different domains. As shown in FIG. 4, a MTNC-ID "123" is used for the N3 segment, which includes the transport segment {L1}. A MTNC-ID "456" is used for the N9 segment, which includes the transport segments {L2}, {L3}, and {L4}. The MTNC-ID "456" is shared across the data center 410 (including the DC network 411), the transport network 440, and the DC network 421 in the data center 420. A MTNC-ID "789" is used for the N6 segment, which includes the transport segments {L5}, {L6}, and {L7}. The MTNC-ID "789" is shared across the data center 420 (including the DC network 421), the transport network 450, and the DC network 431 in the data center 430.

MTNC-IDs may be set up by estimating demand on each forwarding (or connection) path between two service end points. It is noted that, the 3GPP connection segments (user plane segments), e.g., the N3 and N9 segments identified by GPRS tunneling protocol (GTP) tunnel endpoint identifiers (TEIDs), only exist for the duration of a PDN session. It should also be noted that a MTNC-ID is not per user (or PDN) session, and the lifetime of the MTNC-ID is based on negotiation across TPMs and SDN-Cs for that connection path and context.

MTNC-IDs may be created and managed through negotiations between TPMs and SDN controllers. Each MTNC-ID is uniquely created for each connection path. A connection path may correspond to multiple MTNC-IDs each indicating a different set of resource provisioning requirements. The MTNC-IDs may then be bound to 3GPP data plane segments (e.g., GTP TEIDs). Details will be provided in the following for binding the MTNC-IDs, and for carrying the MTNC-IDs in the data plane so that transport entities on-path may provide the level of service guaranteed.

A mobile network may provision resources to handle QoS, compute and storage based on a slice and a service selected by a user. The provisioned resources may correspond to a "service slice". For obtaining transport resources corresponding to the requirements of a service slice in the mobile network domain, it would be desirable to provide a means to request and provision these transport resources, and to carry policy binding information in data packets so that the transport domain may provide the right level of service according to the policy binding information. The policy binding information may include MTNC-IDs that need to be set up before being applied to the data packets.

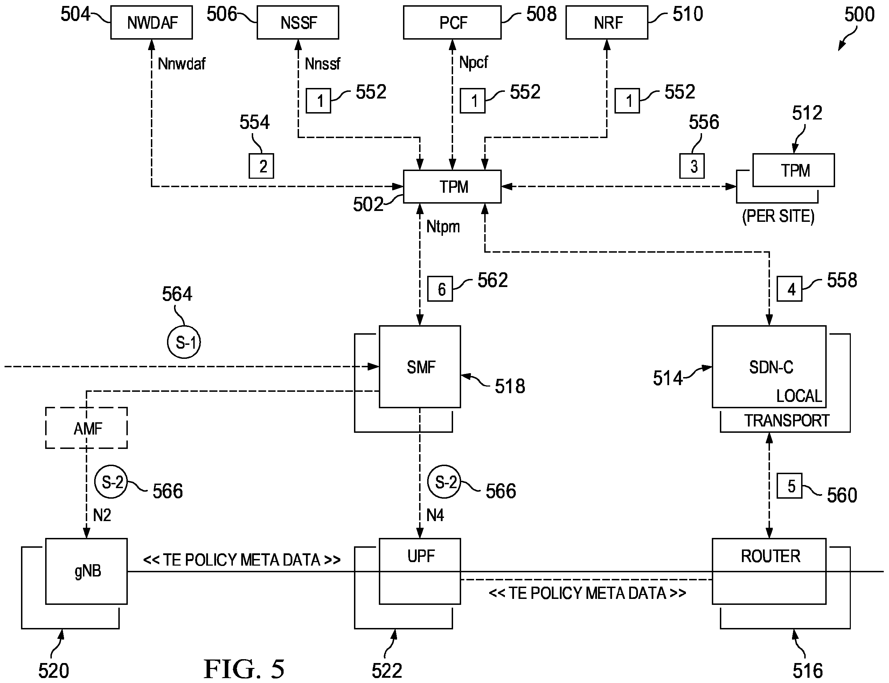

FIG. 5 illustrates a diagram 500 showing embodiment communications between control plane functions, highlighting setup of MTNC-IDs in the control plane. FIG. 5 shows a TPM 502, a NWDAF 504, a network slice selection function (NSSF) 506, a PCF 508, a network resource function (NRF) 510, one or more TPMs 512, one or more SDN-Cs 514, one or more SMF 518, and one or more gNBs 520. The TPM 502, the NWDAF 504, the NSSF 506, the PCF 508, the NRF 510, and the one or more SMFs belong to a first customer network (first site). Each of the TPM 512 belongs to a second customer network (second site), where traffic may be transmitted between the first customer network and each of the second customer networks. Each of the SMF 518 is configured to manage a set of UPFs 522. Each of the gNBs 520 provides access services to UEs in the first customer network.

Each of the SDN-Cs 514 belongs to a transport network, which may be a local transport network of a customer network, such as the DC network 411 of the data center 410 in FIG. 4, or a non-local transport network of a customer network, such as the backhaul network 440 in FIG. 4. Each SDN-C 514 manages multiple routers 516 within a corresponding transport network. As shown, traffic is transmitted from a gNB 520 to a UPF 522, which then forwards the traffic to a router 516.

In general, communications between the control plane functions includes determining a traffic matrix from E2E (steps 552, 554 and 556), and negotiating transport resources and binding MTNC or tokens (steps 558, 560 and 562). When a mobile user session is created (step S-1 564), a network policy and a MTNC-ID are installed in a UPF. When both the UPF and the Router (from step 560) have the same binding information for the policy, resources along the transport path may be assigned accordingly.

The TPM 502 may obtain configuration information from databases. As shown, the TPM 502 may obtain information from the NSSF 506, the PCF 508, and the NRF 510 (step 552). The TPM 502 may obtain topology and configuration information about the first customer network from the NRF 510 and other configuration databases. The TPM 502 may subscribe or poll for slice and network policy information from the NSSF 506 and PCF 508. Information obtained here may be used in subsequent steps to derive information about connection paths and traffic matrix. Although FIG. 5 shows that the TPM 502 obtains the information from the NSSF 506, the PCF 508, and the NRF 510 at the same step 552, obtaining the information from the NSSF 506, the PCF 508, and the NRF 510 may be performed in different orders, at different time or the same time.

The TPM 502 may derive demand estimates. The TPM 502 may subscribe, from the NWDAF 504 (step 554) (and may also from a UPF, a SMF, or any other session and data path nodes), for data that may be used to calculate and estimate traffic on each connection path. The TPM 502 may also use historical data and other network policy information for deriving the estimates. The demand estimates may be used for negotiating bandwidth, latency and other QoS provisioning with other TPMs, such as the TPM 512, for transmission from the first customer network to other customer networks.

The TPM 502 may negotiate traffic matrices with other TPMs 512 (step 556). The TPM 502 may use estimates derived at step 554 to agree across the networks on traffic estimates per connection path. During the communications with the other TPMs 512, the TPM 502 and a TPMs 512 may additionally exchange MTNC-IDs (or tokens) assigned or determined end to end (E2E) per traffic class or CoS and connection path. A MTNC-ID (token) handling system may be provided for assigning unique MTNC-IDs per traffic class and connection path.

The TPM 502 may Program MTNC-IDs at each SDN-C 514. The TPM 502 may send MTNC-IDs assigned/determined at step 556 to each SDN-C on a connection path (corresponding to a 3GPP user plane segment, e.g., N3 or N9 segment) (step 558). The MTNC-IDs (and thus, the associated service class information, such as QoS requirements bandwidth, latency, etc., which is identified by the MTNC-IDs) are used by each SDN-C 514 in each transport domain to program the respective transport network for providing transport services according to the MTNC-IDs.

Each SDN-C 514 may program, with the MTNC-IDs received from the TPM 502, routers it manages (step 560). A SDN-C 514 may program a TE policy and parameters to routers on a TE transport path or segment and replies to the TPM 502 (step 558). If multiple SDN-Cs are being programmed corresponding to a MTNC-ID, such as the SDN-Cs 412, 422 and 442 are programmed with the MTNC-ID "456" in FIG. 4, only after all SDN-Cs accept the TE policy, does the TPM commits the MTNC-ID.

Each SMF 518 may subscribe for the MTNC-IDs. A SMF manages a set of UPFs in the corresponding customer network. A SMF 518 may request the TPM 502 to provide MTNC-IDs for forwarding paths between each pair of UPFs (corresponds to a 3GPP data plane segment) (step 562). If the SMF 518 has estimates for the forwarding path, it may provide information about the forwarding path to the TPM 502. The TPM 502 may respond with subscription and notification for each MTNC-ID (step 562), including class of service provided, slice information (for isolation) and/or load information. The TPM 502 may update the status of MTNC-IDs on a continual basis with notifications.

A SMF 518 may receive an incoming session request (step 564). When the SMF 518 receives a session establishment request initiated by a user equipment (UE), it handles the request and checks information about the request, e.g., a network policy, QoS, and slice information of the request. The SMF 518 may then use the policy, QoS and slicing information to derive a MTNC-ID. The SMF 518 may determine the MTNC-ID from a list of MTNC-IDs received from the TPM 502.

The SMF 518 may configure the UPFs 522 with the derived MTNC-ID (step 566). In some embodiments, the MTNC-ID may be configured in the N4 UPF configuration procedure. The N4 UPF configuration parameters may remain the same as specified in the 3GPP TS 23.501, with the addition of the MTNC-ID, which is also configured to the UPFs 522. Each UPF 522 may include (or add, or insert) the MTNC-ID in each data packet of the user session. Transport entities on-path, such as the routers 516, may inspect each data packet for a MTNC-ID, and grant resources or service levels in the transport network according to the MTNC-ID carried in each data packet. Similar configuration may also be made to a gNB 520 (through the N2 interface) for upstream packets over N3 interface. That is, the MTNC-ID may be configured for the gNB 520, which may add the MTNC-ID to each uplink data packets. Details about the meta data, on-path handling and transport network will be provided later in the disclosure.

A MTNC-ID is generated by a TPM to be unique for each connection path and per class of service (including QoS requirements and slice). There may be more than one MTNC-ID for the same QoS requirements and connection path if there is a need to provide isolation (slice) of the traffic. MTNC-IDs are per class of service and connection path, and not per user session (nor is it per data path entity).

Since MTNC-IDs need to be unique, TPMs at sites that correspond to both ends (service end points) of a connection path may negotiate values of the MTNC-IDs assigned. The MTNC-ID space may be partitioned in the mobile domain so as to avoid collisions. The consumed identifier space may be sparse, if, e.g., the MTNC-IDs are 16 bits or more. Thus a simple partitioning scheme may be feasible. A formula for determining the number of permutations for "T" traffic classes (i.e., CoS) across "N" sites, with fully meshed, may be (N^{∗}(N-1)/2) * T. If there are multiple slices for the same QoS class that needs to be fully isolated, this will increase the number of MTNC-IDs assigned. For example, if there are 5 traffic classes between 16 sites, there are 600 MTNC-IDs that need to be set up and managed.

A TPM creates unique MTNC-IDs per connection path (or forwarding path) and per set of resource provisioning requirements. For example, a TPM at a site may create unique MTNC-IDs per QoS class, path and slice (for an E2E path, i.e., a connection path, between 2 sites with TPMs). If two TPMs create MTNC-IDs for the same path and attempt to negotiate, the tie may be broken by selecting the one with a greater value (or by any method to resolve). This may be a part of determining the traffic matrix process between the TPMs. The TPM may then set up and provision QoS and slice with each SDN-C on the E2E path. With the MTNC-IDs configured or created, the TPM is ready to provision the MTNC-IDs to SMFs. Each SMF that has subscribed to paths between sets of UPFs are notified of the corresponding MTNC-IDs and their status. The TPM may send different sets of MTNC-IDs to different SMFs to manage load, lifetime, etc., of MTNC-IDs in a fine grained manner.

A SDN-C of a transport network may obtain MTNC-IDs from a TPM for setting up per path QoS in the transport network. It may provision routers that it manages with the MTNC-IDs obtained and respond to the TPM. The SDN-C may associate transport paths configured with the MTNC-IDs that it has received. There may also be a feedback mechanism between the SDN-C and the TPM, where the SDN-C constantly feeds back information about transport paths in the transport network configured according to the MTNC-IDs. The feedback information may include status of the transport paths, load and other conditions or performance metrics of the transport paths per MTNC-ID.

Each SMF of a customer network may send a subscription request to a TPM of the customer network subscribing a list of MTNC-IDs for a set of UPFs that it manages. A SMF may send, along with the request, the set of UPFs and additional information such as expected traffic (which may be derived based on historical patterns or an operator policy). The TPM may acknowledge the request and notify the SMF with a list of MTNC-IDs per connection path (e.g., UPF - UPF) and class of service (including QoS, slice). A SMF may configure a MTNC-ID with a UPF in the N4 session setup procedure that is specified in the 3GPP TS 23.502. For example, a SMF may add the MTNC-ID in the parameters that are to be provided to the UPF in the N4 session setup procedure according to the 3GPP TS 23.502, and send the all the parameters including the MTNC-ID to the UPF.

In the data plane, a UPF (and a gNB for N3 segment) may insert the MTNC-ID in each packet to be transmitted on a connection path (e.g., N3, or N9 segment). Routers on a connection path may provide services based on the MTNC-ID carried in each data packet and as configured by respective SDN-Cs.

A MTNC-ID is different from a GTP TEID, even though both identifiers are related. GTP TEIDs are assigned when there is a PDN session request from a user. MTNC-IDs, by contrast, are created when a TPM creates and negotiates traffic paths with the SDN controllers. Multiple TEIDs may correspond to a single MTNC-ID. Thus, the MTNC-ID is provisioned for periods of time determined by the management system (instead of UE session time), and may be adjusted by the management system. There is a N:1 relationship between MTNC-IDs and TEIDs, which allows a communications system to scale well.

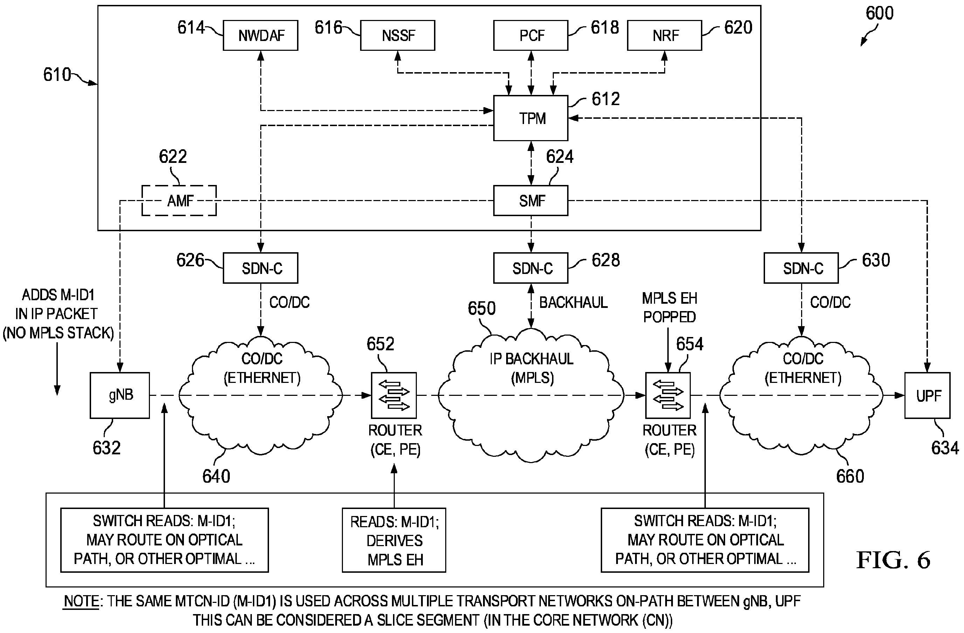

FIG. 6 illustrates a diagram of an embodiment communications system 600 highlighting a MTNC-ID configured across multiple transport networks. The communications system 600 includes a customer network 610. The customer network 610 includes control plane functions such as a TPM 612, a NWDAF 614, a NSSF 616, a PCF 618, a NRF 620, and an AMF 622. As discussed, the TPM 612 may collect data from one or more control plane functions for estimation of traffic demand, CoS, QoS requirements, and traffic matrices. The TPM 612 may provide a list of MTNC-IDs to a SMF 624 for paths between UPFs (N9 interface) or between gNB and UPF (N3 interface), where each of the paths satisfies a provisioned set of QoS, CoS and isolation requirements. The TPM 612 also provisions MTNC-IDs to one or more SDN-Cs of transport networks, such as SDN-Cs 626, 628, and 630, on a connection path, according to which resources are provisioned to route traffic on the connection path. Multiple MTNC-IDs may be served by the same segment routes in a transport network. The transport network is responsible to provide services that are bound by the MTNC-IDs within the transport network.

A PDN connection may be initiated by a UE. The PDN connection, as shown in this example, includes two (may be more) transport slice segments, i.e., between the gNB 632 and a PE router 652, between PE routers 652 and 654, and between a PE Router 654 and the UPF 634. Based on the CoS, the QoS requirement, and the isolation requirement of the PDN connection, a MTNC-ID may be determined for the connection path between the gNB 632 and the UPF 634. As discussed above, a MTNC-ID may also be determined for a slice segment between two UPFs, or between a UPF and an application server (if the TPM and MTNC-ID mechanism is configured by the 3GPP service provider and the application server provider).

In this example, the connection path between the gNB 632 and the UPF 634 traverses three transport networks, i.e., a CO or DC 640 (which is an Ethernet), a IP backhaul 650 (which uses multiprotocol label switching (MPLS)), and a CO or DC 660 (which is also an Ethernet). Thus, the same MTNC-ID, i.e., "M-ID1" in this example, corresponding to the connection path between the gNB 632 and the UPF 634 may be provided to each of the SDN-Cs 626-630. Each of the SDN-Cs 626, 628 and 630 manages traffic routing for the PDN connection within the respective transport networks 640, 650 and 660 according to the "M-ID1". The "M-ID1" is thus used across multiple transport networks on-path between the gNB 632 and the UPF 634.

In one embodiment, when the PDN connection setup is initiated by the UE, the SMF 624 may provide the "M-ID1" to the gNB 632, and the SMF 624 may provide the "M-ID1" to the UPF 634. The gNB 632 may add the "M-ID1" in IP packets received by the gNB 632 from the UE. A switch of the transport network 640 may read the "M-ID1" carried in an IP packet, based on which, the switch may route the IP packet on a traffic engineered optical path, or another path that is determined to be comparatively optimal. When the IP packet is routed from the transport network 640 to the transport network 650, an edge router 652 of the transport network 650 reads the "M-ID1" carried in the IP packet, and based thereon, derives an MPLS extension header (EH) for routing the packet in the transport network 650. In this case, there is no change to the MPLS router behavior in the transport network 650. The MPLS EH is popped at an edge router 654 of the transport network 650. A switch of the transport network 660 reads the "M-ID1" carried in the packet, and may route the IP packet on an optical path, or another path that is determined to be comparatively optimal.

Control flows are given in the following showing communications amongst control plane entities across mobile and transport networks based on the discussions above. Data packets may carry meta data indicating how the data packets may be routed by routers. There may generally be two approaches for carrying routing information , i.e., an explicit route list approach and an implicit route approach. In the explicit route list approach, meta data carried in data packets includes explicit route lists for each class of service. In the implicit route approach, meta data carried in data packets may only include a MTNC-ID which is associated with a traffic class. The first router (or a subset of routers), e.g., an edge router, in each transport domain may inspect the MTNC-ID carried in each data packet and derive an explicit route list.

Explicit route lists may be used in cases where the control plane for routers may not be able to program the MTNC-IDs. Thus, the explicit route list approach may be used when it is necessary to limit changes to router control plane programming. Implicit routes may be used when there are multiple transport technologies (e.g., optical, MPLS and Ethernet) used across a 3GPP transport segment, e.g., the N9 segment as shown in FIG. 4. The multiple transport technologies may include multiprotocol label switching (MPLS), segment routing (SR), SR over IPv6 data plane (SRV6), layer 1 (optical transport network (OTN)), or layer o (wavelength division multiplexing (WDM)) optical data planes.

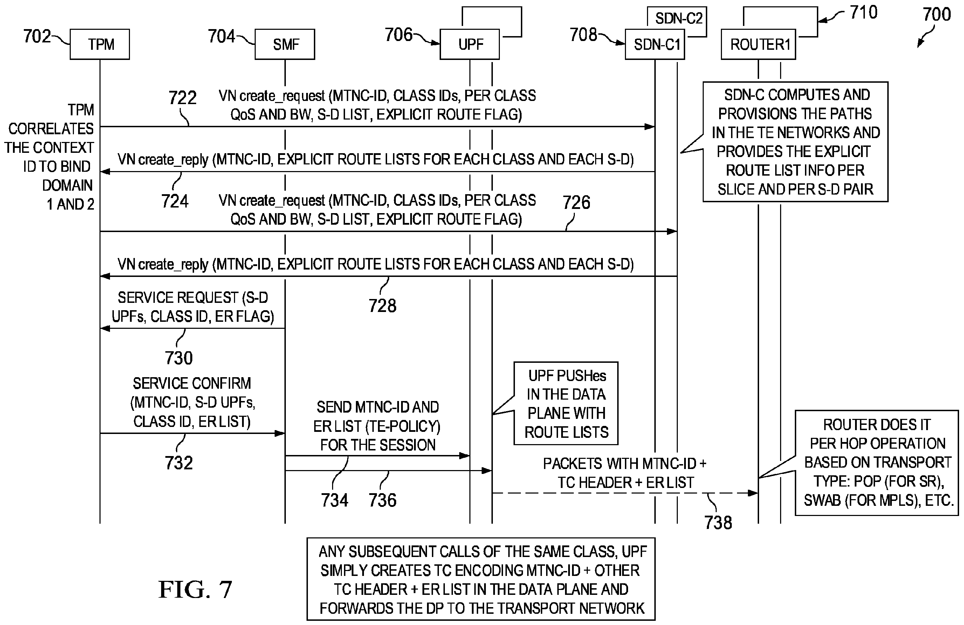

FIG. 7 illustrates a diagram 700 showing embodiment communications between a TPM 702, a SMF 704, multiple UPFs 706, multiple SDN-Cs 708, and routers 710, highlighting explicit route lists. In this example, the TPM 702 communicates with the multiple SDN-Cs 708 (such as SDN-C1, SCN-C2) to obtain explicit route lists. The TPM 702 provides obtained explicit route lists to the SMF 704. The SMF 704 may then send the explicit route lists to one or more UPFs 706. A UPF 706 may insert a MTNC-ID along with a transport label and an interface. The interface is physical interface on which a data packet is transported, e.g., an IP interface, an optical interface, or layer 2 interface, etc. A transport label is a field such as a virtual LAN (VLAN) label, a virtual extensible LAN (VXLAN) label, a MPLS label, or any label that identifies a particular instance of data packets coming from the same UPF. Explicit transport context is inserted into data flows. The routers 710 in each transport network are programmed with an explicit route list and transport service parameters by a corresponding SDN controller 708 (e.g., SDN-C1, SDN-C2). Routers on a connection path inspect this MTNC-ID and provide the requisite level of service. Since the full transport context (including the explicit route list) is available, there may be efficiencies to be gained with the trade-off being that the UPFs 706 and the routers 710 need to be programmed with the full transport context.

As shown, the TPM 702 sends a virtual network (VN) create_request to the SDN-C1 708 for creating a virtual network connection (VNC) (step 722). The VN create_request includes a MTNC-ID, class IDs (identifying CoS), a QoS class and bandwidth, a list of sources and destinations of the VNC (i.e., S-D list), and an explicit route (ER) flag that is set to indicate that the TPM 702 is requesting explicit route lists. The VN create_request is per QoS class and bandwidth in this example. Each SDN-C 708 of a transport network computes and provisions transport paths in the transport network, and provides an explicit route lists per slice and per S-D pair. In response, the SDN-C1 708 sends a VN create_reply to the TPM 702 (step 724). The VN create_reply includes the MTNC-ID, and an explicit route list for each CoS and each pair of source and destination.

Similarly, the TPM 702 sends a VN create_request to the SDN-C2 708 for creating a virtual network connection (VNC) (step 726). The VN create_request includes a MTNC-ID, class IDs (identifying CoS), a QoS class and bandwidth, a list of sources and destinations of the VNC (i.e., S-D list), and an explicit route flag indicating that the TPM 702 is requesting explicit route lists. The VN create_request is per QoS class and bandwidth in this example. In response, the SDN-C2 708 sends a VN create_reply to the TPM 702 (step 728). The VN create_reply includes the MTNC-ID, and an explicit route list for each CoS and each pair of source and destination.

The SMF 704 may send a service request to the TPM 702 (step 730). The service request may include or indicate each pair of UPFs between a source and a destination of a VNC (i.e., S-D UPFs) that are managed by the SMF 704, a class ID, and an ER flag indicating that an explicit route list is requested. The TPM 702 replies with a service confirmation (step 732). The service confirmation may include a MTNC-ID, the S-D UPFs, the class ID and an explicit route list (i.e., ER list). The SMF 704 may send the MTNC-ID and the ER list (with a TE policy) to each UPF 706 (steps 734, 736). Each UPF 706 may push, in the data plane, an explicit route list to a data packet. The UPFs 706 may forward data packets to the routers 710, with each packet carrying a MTNC-ID, a transport context header (TC header) and an explicit route list (step 738). The TC header may include information such as the MTNC-ID, a traffic class, a transport type, and/or a length. The transport context header is associated with the MTNC-ID and is identifiable by the MTNC-ID. The transport context header provides a UPF with what to put in the data packets. For any subsequent calls (or services) of the same CoS, each UPF may simply encode a data packet with a MTNC-ID, transport context header and an explicit route list in the data plane, and forward the data packet to a transport network. Each router of a transport network may route a data packet based on a transport type indicated by the data packet, such as using POP (for segment routing (SR)), or SWAB (for MPLS).

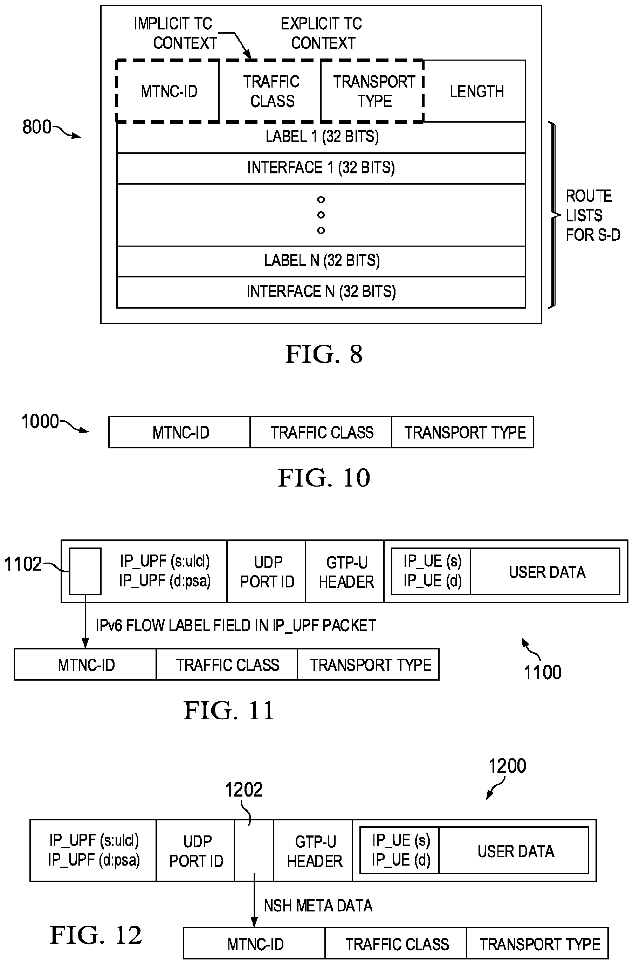

FIG. 8 illustrates a diagram of an information element (IE) 800 including explicit transport context. The explicit transport context may be encoded in the data plane. The IE 800 includes fields for containing the explicit transport context. The explicit transport context includes an MTNC-ID, a traffic class, a transport type, a length, and meta data for an explicit route list for S-D pairs. The MTNC-ID, the traffic class, and transport type may be viewed as implicit transport context.

The MTNC-ID identifies the transport context. The traffic class represents different grades of service that map to slice classes, QoS requirements (e.g., B/W and latency, reliability), and a sharing policy (e.g., isolation). The transport type defines a transport data plane technology of a transport network, e.g., MPLS, SR or segment routing over IPv6 data plane (SRV6), or optical, etc. The transport type determines per hop action for a label. For example, for SR or SRV6, the label action is POP at a node receiving a data packet header including the transport type, while for MPLS, the label action is SWAP. The length determines the total length of this information element.

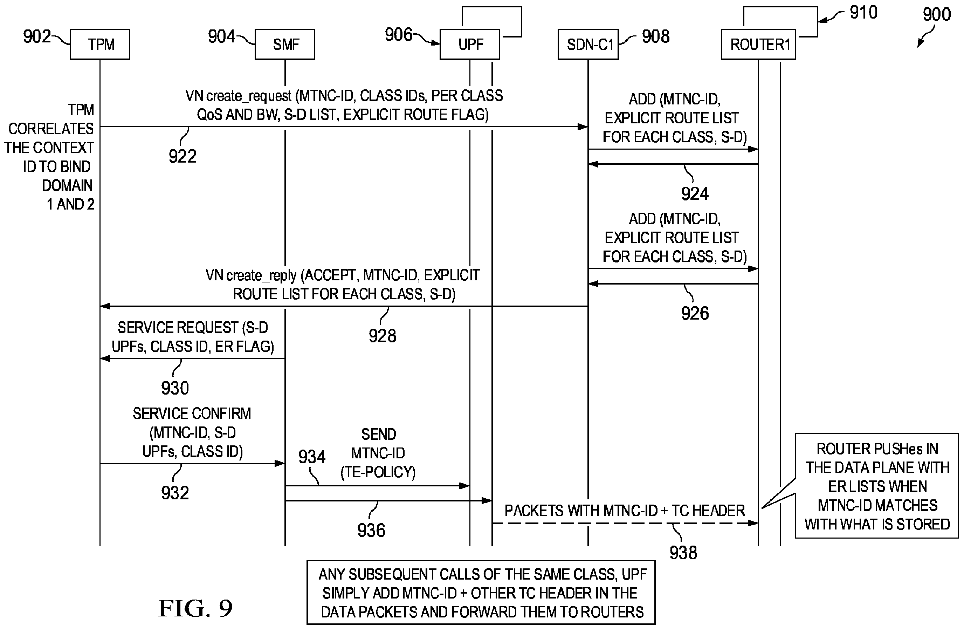

FIG. 9 illustrates a diagram 900 showing embodiment communications 900 between a TPM 902, a SMF 904, multiple UPFs 906, a SDN-C1 908, and routers 910, highlighting implicit route. In this example, the TPM 902 communicates with the SDN-C1 908 to obtain transport context. The transport context is implicit transport context that includes a MTNC-ID, a traffic class and a transport type. The TPM 902 provides obtained the transport context to the SMF 904. The SMF 904 may then send the transport context to one or more UPFs 906 during a session handling process (as described above. A UPF 906 may insert transport context information into data flows (in a 3GPP PDN across N3 and N9). The routers 910 in each transport network are programmed, by the SDN-C 908, with the transport context information as per slice and QoS parameters. The first router in each transport network inspects MTNC-IDs and derives the associated transport context (e.g., list of labels or segments and interfaces for that transport network). In the case when multiple transport technologies (e.g., optical, MPLS and Ethernet are used in the transport networks along the N9 segment), each transport network may push or pop label or segment headers (or shim headers) to provide services in that transport network.

As shown, the TPM 902 may send a VN create_request to the SDN-C 908 for creating a virtual network connection (VNC) (step 922). The VN create_request may include a MTNC-ID, class IDs (identifying CoS), a QoS class and bandwidth, a list of sources and destinations of the VNC (i.e., S-D list), and an explicit route (ER) flag. The ER flag is not set in this example, indicating that the TPM 902 is requesting for implicit route. That is, explicit route lists are not requested. The VN create_request is per QoS class and bandwidth in this example. The SDN-C1 908 communicates with each router 910 (e.g., router 1) for adding the MTNC-ID and an explicit route list for each source-destination pair (steps 924, 926). The SDN-C1 908 may then send a VN create_reply to the TPM 902 (step 928). The VN create_reply indicates acceptance of the VN create_request, and includes the MTNC-ID. If the ER flag is set to request for explicit route lists, the VN create_reply may also include an explicit route list for each CoS and each pair of source and destination.

The SMF 904 may send a service request to the TPM 902 (step 930). The service request may include or indicate a pair of UPFs between a source and a destination of a VNC (i.e., S-D UPFs) that are managed by the SMF 904, a class ID, and an ER flag indicating that implicit transport context is requested. The TPM 902 may reply the SMF 904 with a service confirmation (step 932). The service confirmation may include a MTNC-ID for each pair of S-D UPFs, the S-D UPFs, and the class ID. The SMF 904 may send a MTNC-ID (with a TE policy) to each UPF 906 (steps 934, 936) in response to user sessions initiated.

Each UPF 906 may add the MTNC-ID to data packets and forward the data packets to the routers 710, with each packet carrying a TC header that include the MTNC-ID (step 938). For any subsequent calls (or services) of the same CoS, each UPF may simply add the transport context header that includes the MTNC-ID in data packets, and forward the data packet to routers of a transport network.

The implicit transport context, i.e., transport context header that includes a MTNC-ID, which does not include an explicit route list, may be carried in an IPv6 flow label, network service header (NSH) meta-data, a GTP extension header or other encapsulation of meta data.

FIG. 10 illustrates a diagram of embodiment implicit transport context 1000. The implicit transport context 1000 includes a MTNC-ID, a traffic class and a transport type. The traffic class and the transport type have the same meaning as described with respect to FIG. 8.

Various ways may be used to provide transport context, either explicit or implicit transport context, encoding in the data plane programming. Some examples include encoding the transport context in an IPv6 flow label, adding the transport context as NSH meta data, or in a GTP extension header. FIG. 11 illustrates a diagram of an embodiment IP_UPF packet 1100. The IP_UPF packet 1100 includes an IPv6 flow label field 1102, and other fields that are well known to those of ordinary skill in the art. The IPv6 flow label field 1102 may be used to contain the implicit transport context, i.e., a MTNC-ID, a traffic class and a transport type, as shown in FIG. 10.

Routers on path may inspect the IPv6 flow label and interpret the value the IPv6 flow label as MTNC-ID + traffic class + transport type. The MTNC-ID may be checked against a configuration (by a SDN-C), and the requisite level of service is then provided in each transport network segment.

FIG. 12 illustrates a diagram of another embodiment IP_UPF packet 1200. The IP_UPF packet 1200 includes a NSH meta data field 1202, and other fields that are well known to those of ordinary skill in the art. The NSH meta data field 1202 may be used to contain the implicit transport context, i.e., a MTNC-ID, a traffic class and a transport type, as shown in FIG. 10. The NSH meta data field 1202 may be used, e.g., in the case of IPv4. Routers on path may inspect the NSH meta data field and interpret the value of the field as MTNC-ID + traffic class + transport type. The MTNC-ID may be checked against a configuration (by a SDN-C) and the requisite level of service is provided in each transport network segment.

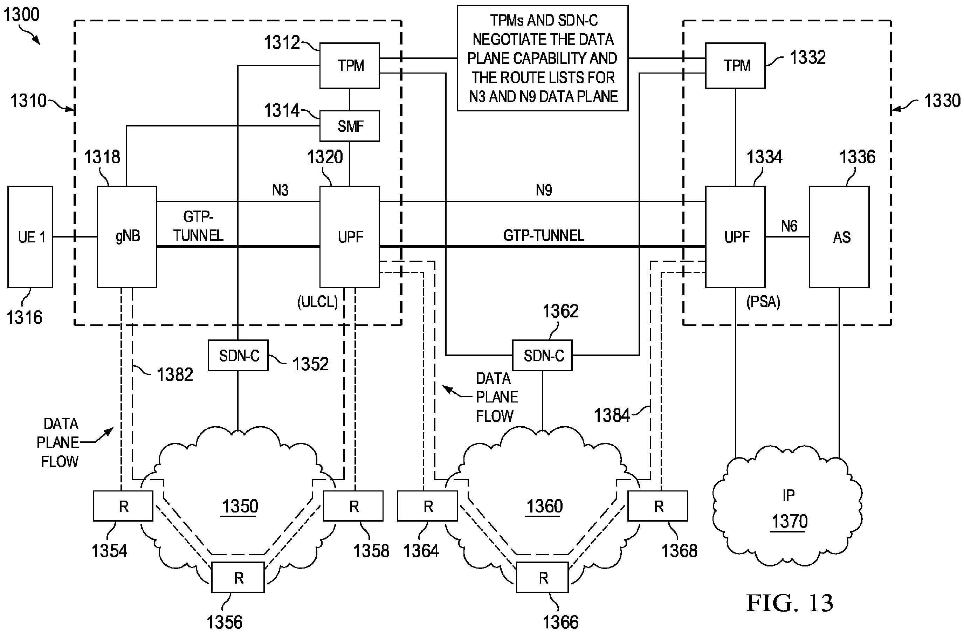

FIG. 13 illustrates a diagram of an embodiment communications system 1300. FIG. 13 shows how transport context is negotiated in the control plane components across TPMs and SDN-Controllers to ensure that transport data plane technology and its route object are binding, so that a TPM may be able to enforce the right transport context to its subsequent control elements, such as a SMF and a UPF. Based on the transport context that is passed down to gNBs and UPFs, the gNBs and the UPFs may be able to add transport context information element (e.g., as the tunneling header or meta data) to data packets, which may be routed according to the transport context.

As shown, the communications system 1300 includes a mobile network 1310, and a mobile network 1330 with traffic communicated between the two mobile networks 1310 and 1330. The mobile network 1310 includes a TPM 1312 and a SMF 1314. The mobile network 1310 includes a TPM 1332. Traffic of a user session initiated by a UE 1316 is transmitted to a gNB 1318 in the mobile network 1310, then forwarded to a UPF 1320 of the mobile network 1310, to a UPF 1334 of the mobile network 1330, and then to an AS 1336 of the mobile network 1330. The N3 segment between the gNB 1318 and the UPF 1320 traverses a transport network 1350. The N9 segment between the UPFs 1320 and 1334 traverses a transport network 1360. The N6 segment between the UPF 1334 and the AS 1336 traverses a IP network 1370. The TPMs 1312 and 1332 and SDN-Cs of the transport networks 1350, 1360 and 1370 negotiates with each for data lane capabilities and route lists for transporting traffic along the N3 and N9 segments in the data plane. When the user session is initiated, the SMF 1314 my pass a MTNC-ID to the gNB 1318, and the UPFs 1320 and 1334. The gNB 1318 or the UPF 1320 may add the MTNC-ID to packets received, and forward the packet to a transport network.

For data flow transmission, a GTP-tunnel is established between the gNB 1318 and the UPF 1320, and between the UPF 1320 and the UPF 1334. For the N3 segment, data flows in the data plane are transported in a path 1382, i.e., from the gNB 1318 to routers 1354, 1356 and 1358 of the transport network 1350, and then to the UPF 1320. For the N9 segments, the data flows are transported in a path 1384, i.e., from the UPF 1320 to routers 1364, 1366 and 1368 of the transport network 1360, and then to the UPF 1334. The transport context, such as the explicit transport context as described with respect to FIG. 8, or the implicit transport context as described with respect to FIG. 10, may be encoded in a GTP header of a data packet.

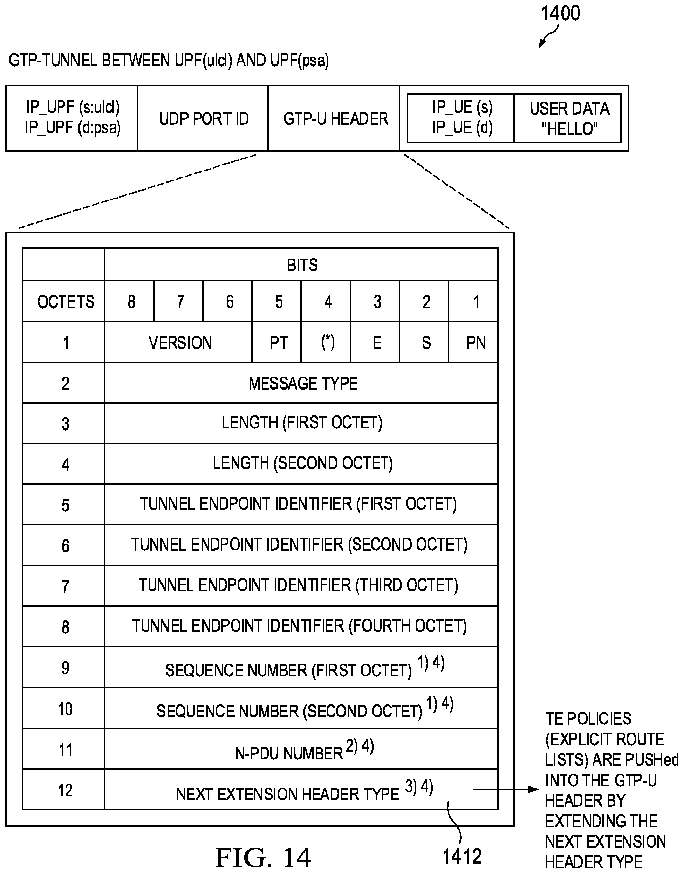

FIG. 14 illustrates a diagram of an embodiment IP packet 1400 transmitted between two UPFs, such as the UPFs 1320 and 1334 in FIG. 13. FIG. 14 shows the GTP tunnel header and how transport context is encoded within the GTP tunnel overhead. As shown, the IP packet 1400 includes a GTP-U header where explicit route lists may be pushed into the GTP-U header by extending the Next Extension Header Type field 1412.

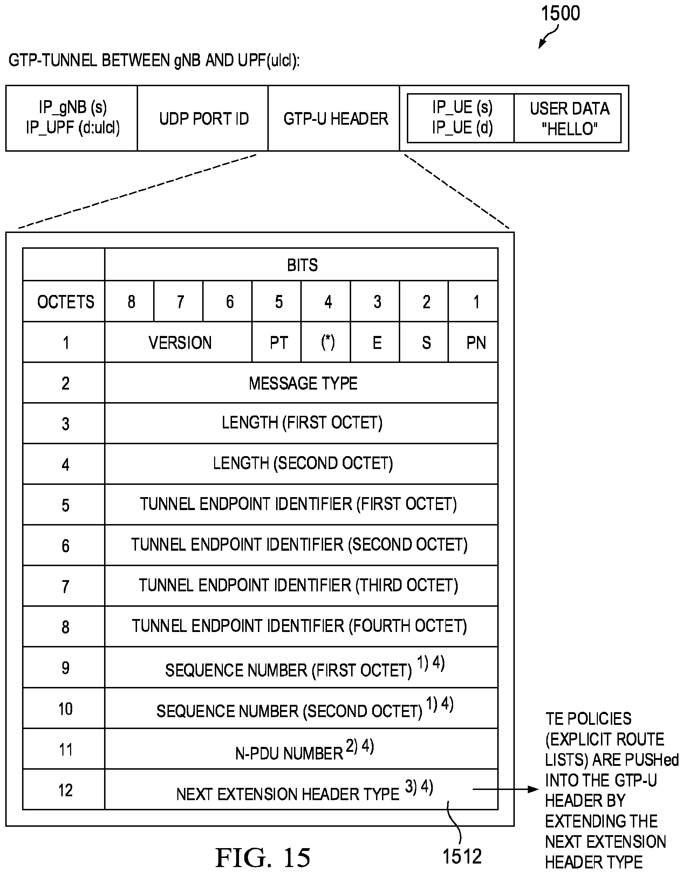

FIG. 15 illustrates a diagram of an embodiment IP packet 1500 transmitted between a gNB and a UPF, such as the gNB 1318 and the UPF 1320 in FIG. 13. FIG. 15 shows the GTP tunnel header and how transport context is encoded within the GTP tunnel overhead. Explicit route lists may be pushed into the GTP-U header by extending the Next Extension Header Type field 1512.

For both cases shown in FIGs. 14-15, in order to encode the transport context, a new header type may be required, e.g., 1100 0011 (for TE explicit lists). When this new header type is parsed in the GTP tunnel header, transport context encoding as shown with respect to FIG. 7 may be added to the header.

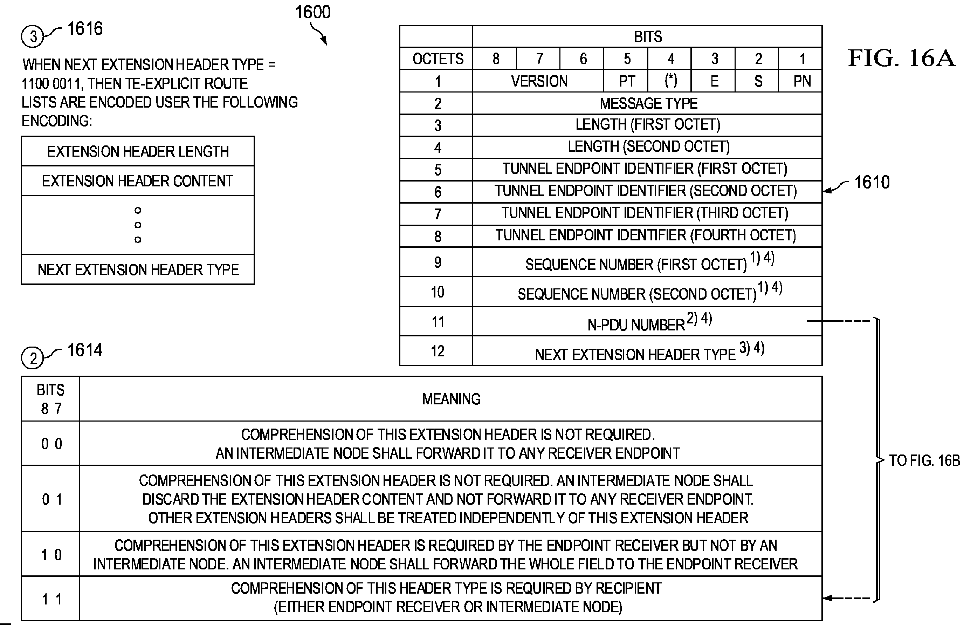

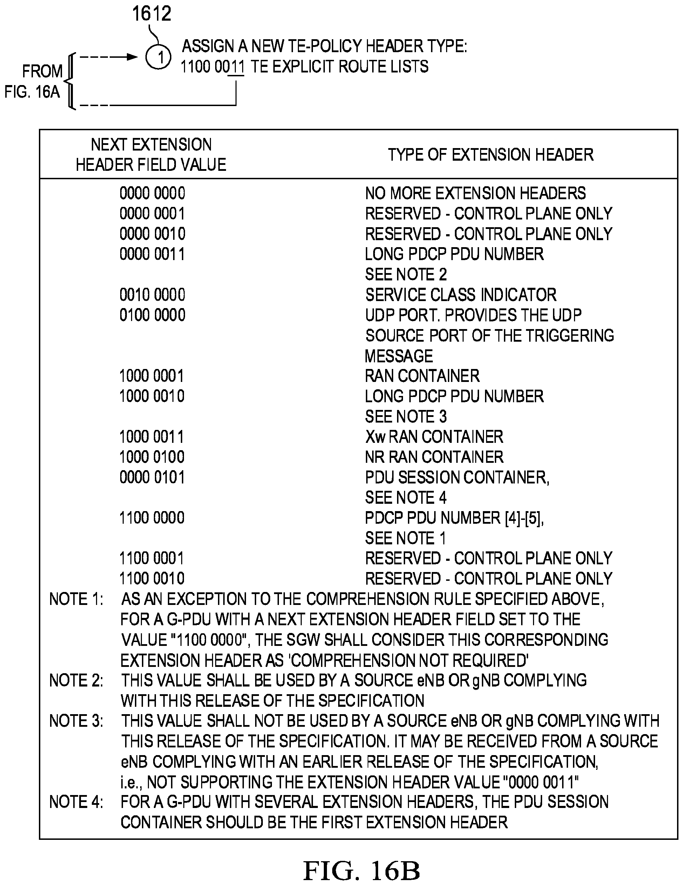

FIG. 16 illustrates a diagram 1600 showing embodiment operations for encoding transport context in a GTP-U header 1610 of a data packet. A new TE-policy header type may be assigned in the Next Extension Header Type field, e.g., 1100 0011 for TE explicit lists (event 1612). The last two digits of the new TE-policy header type, i.e., "11" indicate that comprehension of the header is required by recipient (event 1614). When the Next Extension Header Type field has the value of 1100 0011, the TE explicit route lists may be encoded in a specifically defined way (event 1616) as shown in FIG. 16.

Existing 3GPP networks use transport underlays that are traffic engineered statically, that is, static traffic engineering. They are typically (over)engineered based on capacity estimates and service usage projections. As the 5G network caters to a wider range of services and across a more distributed access points (for satisfying lower latency), the assumptions to engineer these transports statically is difficult. The addition of cloud and virtualized functions and sharing of transports across multiple service provider domains makes engineering these transports even more challenging.

The embodiments of the present disclosure provide methods for configuring meta data identifiers (i.e., MTNC-IDs) that are provisioned and utilized across domains (e.g., mobile network and transport domains) for identifying and granting services of a service level for individual flows. Each MTNC-ID identifies a set of resource provisioning requirements corresponding to a CoS, a set of QoS requirements, and an isolation requirement. The MTNC-IDs may be provisioned by a TPM to a control plane function, e.g., a SMF, programmed by the SMF to UPFs, and passed to one or multiple transport networks on a connection path as in-band meta data. The MTNC-IDs are created per class of service and connection path, and are scalable for provisioning. Each of the one or multiple transport networks may be able to associate the MTNC-IDs with transport paths of the corresponding transport network, where each transport path is configured with provisioned transport resources according to the resource provisioning requirements associated with a MTNC-ID. The MTNC-IDs may be carried in data packets (in-band with the flows) as meta-data. The MTNC-IDs carried in data packets allow each transport network to identify what transport resources need to be provisioned for transporting the data packets within the transport network, to meet the required QoS and other requirements.

The embodiments of the present disclosure provide provisioning and dissemination of e2e transport context, including MTNC-IDs, across mobile and transport domains (TPM - SDN-C). The embodiments also provide procedures for a SMF to subscribe to a TPM for path (MTNC-IDs) information, and TPM procedures for provisioning a SMF with transport context. In addition, what is provided also include data plane programming to carry transport context inband with data packets using IPv6 flow labels, NSH meta data or GTP header extensions, with explicit and implicit routing approaches/modes used across multiple transport network segments.

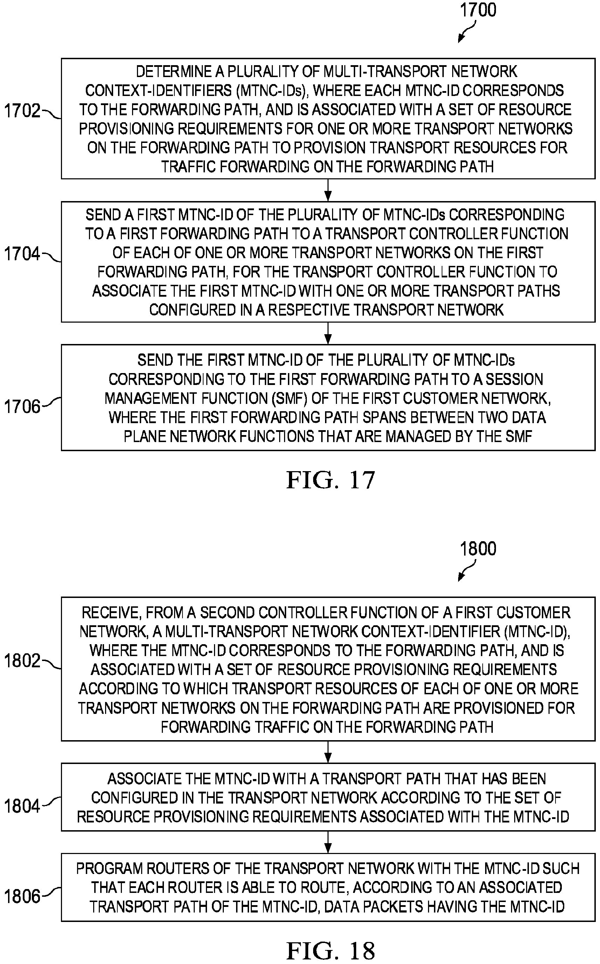

FIG. 17 illustrates a diagram of an embodiment method 1700 for wireless communications. The method 1700 may be a computer-implement method. The method 1700 may be performed by a first controller function, such as a TPM, of a first customer network, such as a mobile network or an edge computing network. As shown, at step 1702, the first controller function of the first customer network determines a plurality of multi-transport network context-identifiers (MTNC-IDs), where each MTNC-ID corresponds to a forwarding path, and is associated with a set of resource provisioning requirements for one or more transport networks on the forwarding path to provision transport resources for traffic forwarding on the forwarding path. The forwarding path spans between two data plane network functions, and the set of resource provisioning requirements comprises a class of service (CoS), a set of quality of service (QoS) requirements, and an isolation requirement.

At step 1704, the first controller function of the first customer network sends a first MTNC-ID of the plurality of MTNC-IDs corresponding to a first forwarding path to a transport controller function of each of one or more transport networks on the first forwarding path, for the transport controller function to associate the first MTNC-ID with one or more transport paths configured in a respective transport network.

At step 1706, the first controller function of the first customer network sends the first MTNC-ID of the plurality of MTNC-IDs corresponding to the first forwarding path to a session management function (SMF) of the first customer network, where the first forwarding path spans between two data plane network functions that are managed by the SMF.

FIG. 18 illustrates a diagram of another embodiment method 1800 for wireless communications. The method 1800 may be a computer-implement method. The method 1800 may be performed by a first controller function, such as a SDN-C, of a transport network, such as a backhaul network or a DC network, on a forwarding path. As shown, at step 1802, the first controller function of the transport network receives, from a second controller function of a first customer network, a multi-transport network context-identifier (MTNC-ID), where the MTNC-ID corresponds to the forwarding path, and is associated with a set of resource provisioning requirements according to which transport resources of each of one or more transport networks on the forwarding path are provisioned for forwarding traffic on the forwarding path. The set of resource provisioning requirements comprises a class of service (CoS), a set of quality of service (QoS) requirements, and an isolation requirement. The second controller function of the first customer network may be a TPM of the first customer network, such as a mobile network or an edge computing network.

At step 1804, the first controller function of the transport network associates the MTNC-ID with a transport path that has been configured in the transport network according to the set of resource provisioning requirements associated with the MTNC-ID. At step 1806, the first controller function of the transport network programs routers of the transport network with the MTNC-ID such that each router is able to route, according to an associated transport path of the MTNC-ID, data packets having the MTNC-ID.

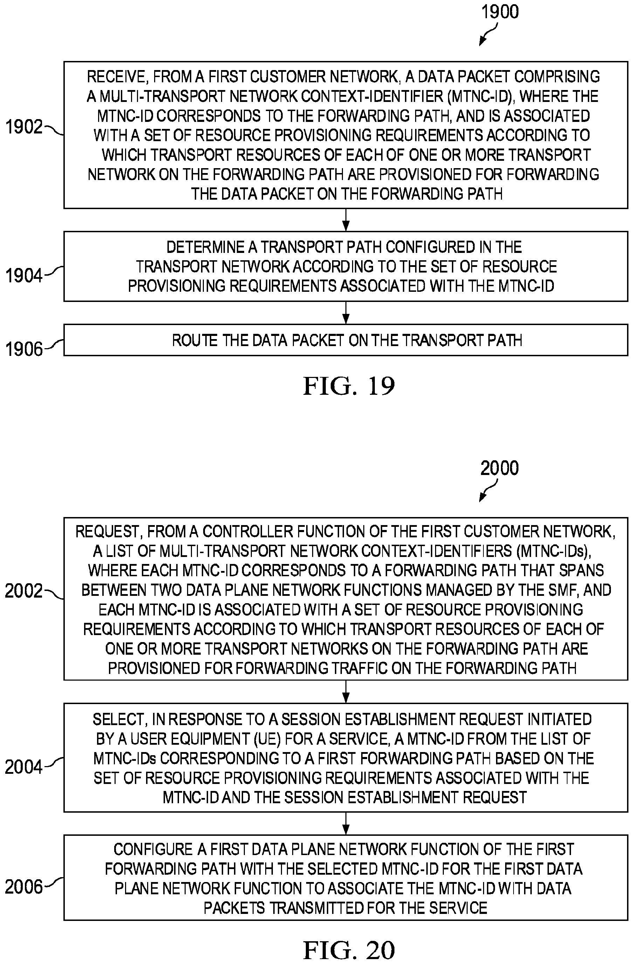

FIG. 19 illustrates a diagram of another embodiment method 1900 for wireless communications. The method 1900 may be a computer-implement method. The method 1900 may be performed by an edge router of a transport network on a forwarding path. As shown, at step 1902, the edge router of the transport network receives, from a first customer network, a data packet comprising a multi-transport network context-identifier (MTNC-ID), where the MTNC-ID corresponds to the forwarding path, and is associated with a set of resource provisioning requirements according to which transport resources of each of one or more transport network on the forwarding path are provisioned for forwarding the data packet on the forwarding path. The set of resource provisioning requirements comprises a class of service (CoS), a set of quality of service (QoS) requirements, and a set of transport path configuration constraints. The first customer network may be a mobile network or an edge computing network.

At step 1904, the edge router of the transport network determines a transport path configured in the transport network according to the set of resource provisioning requirements associated with the MTNC-ID. At step 1906, the edge router of the transport network routes the data packet on the transport path.

FIG. 20 illustrates a diagram of another embodiment method 2000 for wireless communications. The method 2000 may be a computer-implement method. The method 2000 may be performed by a session management function (SMF) of a first customer network, such as a mobile network or an edge computing network. As shown, at step 2002, the SMF of the first customer network requests, from a controller function of the first customer network, a list of multi-transport network context-identifiers (MTNC-IDs), where each MTNC-ID corresponds to a forwarding path that spans between two data plane network functions managed by the SMF, and each MTNC-ID is associated with a set of resource provisioning requirements according to which transport resources of each of one or more transport networks on the forwarding path are provisioned for forwarding traffic on the forwarding path. The set of resource provisioning requirements comprises a class of service (CoS), a set of quality of service (QoS) requirements, and an isolation requirement. The controller function of the first customer network may be a TPM. A data plane network function may be a gNB, a UPF or an application server.

At step 2004, the SMF of the first customer network selects, in response to a session establishment request initiated by a user equipment (UE) for a service, a MTNC-ID from the list of MTNC-IDs corresponding to a first forwarding path based on the set of resource provisioning requirements associated with the MTNC-ID and the session establishment request. At step 2006, the SMF configures a first data plane network function of the first forwarding path with the selected MTNC-ID for the first data plane network function to associate the MTNC-ID with data packets transmitted for the service.

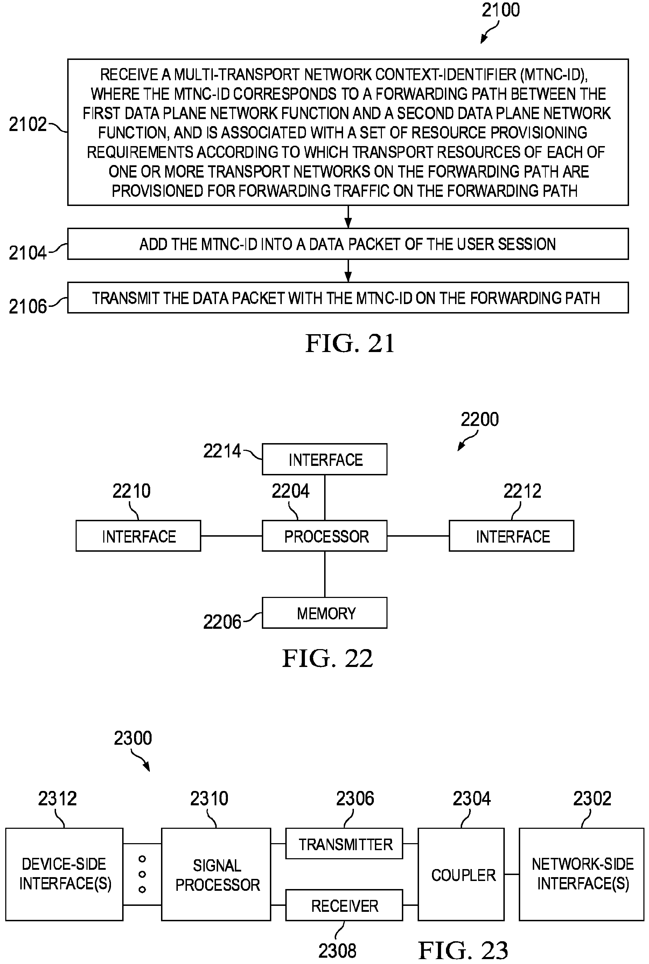

FIG. 21 illustrates a diagram of another embodiment method 2100 for wireless communications. The method 2100 may be a computer-implement method. The method 2100 may be performed by a first data plane network function, such as a gNB, a UPF, or an application server, of a first customer network, such as a mobile network, or an edge computing network. The first data plane network function is configured for a user session. As shown, at step 2102, the first data plane network function of the first customer network receives a multi-transport network context-identifier (MTNC-ID), where the MTNC-ID corresponds to a forwarding path between the first data plane network function and a second data plane network function, and is associated with a set of resource provisioning requirements according to which transport resources of each of one or more transport networks on the forwarding path are provisioned for forwarding traffic on the forwarding path. The set of resource provisioning requirements comprises a class of service (CoS), a set of quality of service (QoS) requirements, and an isolation requirement.

At step 2104, the first data plane network function adds the MTNC-ID into a data packet of the user session. At step 2106, the first data plane network function transmits the data packet with the MTNC-ID on the forwarding path.

Embodiments of the present disclosure may be implemented as computer-implemented methods. The embodiments may be performed by a processing system. FIG. 22 illustrates a block diagram of an embodiment processing system 2200 for performing methods described herein, which may be installed in a host device. As shown, the processing system 2200 includes a processor 2204, a memory 2206, and interfaces 2210-2214, which may (or may not) be arranged as shown in FIG. 22. The processor 2204 may be any component or collection of components adapted to perform computations and/or other processing related tasks, and the memory 2206 may be any component or collection of components adapted to store programming and/or instructions for execution by the processor 2204. In an embodiment, the memory 2206 includes a non-transitory computer readable medium. The interfaces 2210, 2212, 2214 may be any component or collection of components that allow the processing system 2200 to communicate with other devices/components and/or a user. For example, one or more of the interfaces 2210, 2212, 2214 may be adapted to communicate data, control, or management messages from the processor 2204 to applications installed on the host device and/or a remote device. As another example, one or more of the interfaces 2210, 2212, 2214 may be adapted to allow a user or user device (e.g., personal computer (PC), etc.) to interact/communicate with the processing system 2200. The processing system 2200 may include additional components not depicted in FIG. 22, such as long term storage (e.g., non-volatile memory, etc.).

In some embodiments, the processing system 2200 is included in a network device that is accessing, or part otherwise of, a telecommunications network. In one example, the processing system 2200 is in a network-side device in a wireless or wireline telecommunications network, such as a base station, a relay station, a scheduler, a controller, a gateway, a router, an applications server, or any other device in the telecommunications network. In other embodiments, the processing system 2200 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 2210, 2212, 2214 connects the processing system 2200 to a transceiver adapted to transmit and receive signaling over the telecommunications network. FIG. 23 illustrates a block diagram of a transceiver 2300 adapted to transmit and receive signaling over a telecommunications network. The transceiver 2300 may be installed in a host device. As shown, the transceiver 2300 comprises a network-side interface 2302, a coupler 2304, a transmitter 2306, a receiver 2308, a signal processor 2310, and a device-side interface 2312. The network-side interface 2302 may include any component or collection of components adapted to transmit or receive signaling over a wireless or wireline telecommunications network. The coupler 2304 may include any component or collection of components adapted to facilitate bi-directional communication over the network-side interface 2302. The transmitter 2306 may include any component or collection of components (e.g., up-converter, power amplifier, etc.) adapted to convert a baseband signal into a modulated carrier signal suitable for transmission over the network-side interface 2302. The receiver 2308 may include any component or collection of components (e.g., down-converter, low noise amplifier, etc.) adapted to convert a carrier signal received over the network-side interface 2302 into a baseband signal. The signal processor 2310 may include any component or collection of components adapted to convert a baseband signal into a data signal suitable for communication over the device-side interface(s) 2312, or vice-versa. The device-side interface(s) 2312 may include any component or collection of components adapted to communicate data-signals between the signal processor 2310 and components within the host device (e.g., the processing system 2200, local area network (LAN) ports, etc.).

The transceiver 2300 may transmit and receive signaling over any type of communications medium. In some embodiments, the transceiver 2300 transmits and receives signaling over a wireless medium. For example, the transceiver 2300 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 2302 comprises one or more antenna/radiating elements. For example, the network-side interface 2302 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 2300 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a determining unit/module, a forwarding unit/module, a programming unit/module, a configuring unit/module, a negotiating unit/module, a collecting unit/module, a selecting unit/module, an updating unit/module, an associating unit/module, a routing unit/module, a requesting unit/module, a subscribing unit/module, an adding unit/module, and/or a setting unit/module. The respective units/modules may be hardware, software, or a combination thereof. For instance, one or more of the units/modules may be an integrated circuit, such as field programmable gate arrays (FPGAs) or application-specific integrated circuits (ASICs).
- The following references are related to subject matter of the present application: GPP TS 23.501, V15.4.0, "3rd Generation Partnership Project; Technical Specification Group Services and System Aspects; System Architecture for the 5G System; Stage 2 (Release 15)", 2018-12.
- 3GPP TS 23.502, V15.4.1, "3rd Generation Partnership Project; Technical Specification Group Services and System Aspects; Procedures for the 5G System; Stage 2 (Release 15)", 2019-01.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A computer-implemented method, comprising:
determining (1702), by a first controller function of a first customer network, a plurality of multi-transport network context-identifiers, MTNC-IDs, each multi-transport network context-identifier, MTNC-ID corresponding to a forwarding path, and being associated with a set of resource provisioning requirements for one or more transport networks on the forwarding path to provision transport resources for traffic forwarding on the forwarding path, wherein the forwarding path spans between two data plane network functions, and wherein the set of resource provisioning requirements comprises a class of service, CoS, a set of quality of service, QoS requirements, and an isolation requirement;
sending (1704), by the first controller function of the first customer network, a first multi-transport network context-identifier, MTNC-ID of the plurality of multi-transport network context-identifiers, MTNC-IDs corresponding to a first forwarding path to a transport controller function of each of one or more transport networks on the first forwarding path, for the transport controller function to associate the first multi-transport network context-identifier, MTNC-ID with one or more transport paths configured in a respective transport network; and
sending (1706), by first the controller function of the first customer network, the first multi-transport network context-identifier, MTNC-ID of the plurality of multi-transport network context-identifiers, MTNC-IDs corresponding to the first forwarding path to a session management function, SMF of the first customer network, the first forwarding path spanning between two data plane network functions that are managed by the session management function, SMF;
where determining the plurality of MTNC-IDs comprises:
determining a MTNC-ID based on traffic demand estimates between the first customer network and a second customer network receiving traffic forwarded on the forwarding path, and based on the set of resource provisioning requirements associated with the MTNC-ID; and
further comprising:
collecting, by the first controller function of the first customer network, data regarding traffic communicated between the first customer network and the second customer network through one or more transport networks.

2. The computer-implemented method as recited in claim 1, wherein one of the one or more transport networks on the first forwarding path is a transport network within the first customer network, and is configured to forward traffic within the first customer network.

3. The computer-implemented method as recited in claim 1 or 2, wherein the forwarding path is configured to forward traffic transmitted from the first customer network to a second customer network.

4. The computer-implemented method as recited in any of claims 1-3, wherein determining the plurality of MTNC-IDs comprises:
selecting, by the first controller function of the first customer network, a unique MTNC-ID from available MTNC-IDs with a third controller function of a second customer network and a second controller function of a transport network, the unique MTNC-ID corresponding to a forwarding path including the transport network.

5. The computer-implemented method as recited in any of claims 1-4, further comprising:
receiving, by the first controller function of the first customer network from the SMF of the first customer network, a request requesting the first MTNC-ID for data packet transmissions on the first forwarding path.

6. The computer-implemented method as recited in any of claims 1-5, wherein each of the plurality of MTNC-IDs is unique for a corresponding forwarding path and an associated set of resource provisioning requirements.

7. The computer-implemented method as recited in any of claims 1-6, further comprising:
updating, by the first controller function of the first customer network, the plurality of MTNC-IDs continuously.

8. A computer-implemented method, comprising:
receiving (1802), by a first controller function of a transport network on a forwarding path from a second controller function of a first customer network, a multi-transport network context-identifier, MTNC-ID, the MTNC-ID corresponding to the forwarding path, and being associated with a set of resource provisioning requirements according to which transport resources of each of one or more transport networks on the forwarding path are provisioned for forwarding traffic on the forwarding path, wherein the set of resource provisioning requirements comprises a class of service, CoS, a set of quality of service, QoS requirements, and an isolation requirement;
associating (1804), by the first controller function of the transport network, the MTNC-ID with a transport path that has been configured in the transport network according to the set of resource provisioning requirements associated with the MTNC-ID; and
programming (1806), by the first controller function of the transport network, routers of the transport network with the MTNC-ID such that each router is able to route, according to an associated transport path of the MTNC-ID, data packets having the MTNC-ID;
where the MTNC-ID was determined based on traffic demand estimates between the first customer network and a second customer network forwarding traffic forwarded on the forwarding path, and based on the set of resource provisioning requirements associated with the MTNC-ID; and
further comprising:
collecting, by the first controller function of the first customer network, data regarding traffic communicated between the first customer network and the second customer network through one or more transport networks.

9. The computer-implemented method of claim 8, further comprising:
receiving, by the first controller function of the transport network, requests from the second controller function of the first customer network for configuring transport paths according to sets of resource provisioning requirements.

10. The computer-implemented method as recited in claim 8 or 9, further comprising:
receiving, by the first controller function of the transport network, update information of the MTNC-ID.

11. The computer-implemented method as recited in any of claims 8-10, wherein the first controller function of the transport network is a software defined network-controller, SDN-C of the transport network.

12. The computer-implemented method as recited in any of claims 8-11, wherein the first customer network is a radio access network or a mobile core.

13. A computer program product comprising instructions, that when executed by one or more processors, cause the one or more processors to perform the computer-implemented method as recited in any one of claims 112.

## Patentansprüche

1. Computerimplementiertes Verfahren, Folgendes umfassend:
Bestimmen (1702) einer Vielzahl von Multitransportnetzkontext-Kennungen (MTNC-IDs) durch eine erste Steuerungsfunktion eines ersten Kundennetzes, wobei jede Multitransportnetzkontext-Kennung (MTNC-IDs) einem Weiterleitungspfad entspricht und einem Satz von Ressourcenbereitstellungsanforderungen für ein oder mehrere Transportnetze auf dem Weiterleitungspfad zugeordnet ist, um Transportressourcen für die Verkehrsweiterleitung auf dem Weiterleitungspfad bereitzustellen, wobei sich der Weiterleitungspfad zwischen zwei Datenebenen-Netzfunktionen erstreckt und wobei der Satz von Ressourcenbereitstellungsanforderungen eine Dienstklassen(CoS)-Anforderung, einen Satz von Anforderungen an die Dienstqualität (QoS) und eine Isolationsanforderung umfasst;
Senden (1704) einer ersten Multitransportnetzkontext-Kennung, MTNC-ID, der Vielzahl von Multitransportnetzkontext-Kennungen, MTNC-IDs, die einem ersten Weiterleitungspfad entsprechen, an eine Transportsteuerungsfunktion jedes von einem oder mehreren Transportnetzen auf dem ersten Weiterleitungspfad durch die erste Steuerungsfunktion des ersten Kundennetzes, damit die Transportsteuerungsfunktion die erste Multitransportnetzkontext-Kennung (MTNC-IDs) einem oder mehreren Transportpfaden zuordnet, die in einem jeweiligen Transportnetz konfiguriert sind; und
Senden (1706) der ersten Multitransportnetzkontext-Kennung (MTNC-IDs) der Vielzahl von Multitransportnetzkontext-Kennungen (MTNC-IDs), die dem ersten Weiterleitungspfad entspricht, an eine Sitzungsverwaltungsfunktion (SMF) des ersten Kundennetzes zuerst durch die Steuerungsfunktion des ersten Kundennetzes, wobei sich der erste Weiterleitungspfad zwischen zwei Datenebenen-Netzfunktionen erstreckt, die durch die Sitzungsverwaltungsfunktion (SMF) verwaltet werden;
wobei das Bestimmen der Vielzahl von MTNC-IDs Folgendes umfasst:
Bestimmen einer MTNC-ID auf Grundlage von Schätzungen der Verkehrsnachfrage zwischen dem ersten Kundennetz und einem zweiten Kundennetz, das auf dem Weiterleitungspfad weitergeleiteten Verkehr empfängt, und auf Grundlage des Satzes von Ressourcenbereitstellungsanforderungen, der der MTNC-ID zugeordnet ist; und
ferner Folgendes umfassend:
Sammeln von Daten bezüglich Verkehr, die zwischen dem ersten Kundennetz und dem zweiten Kundennetz über ein oder mehrere Transportnetze kommuniziert werden, durch die erste Steuerungsfunktion des ersten Kundennetzes.

2. Computerimplementiertes Verfahren nach Anspruch 1, wobei eines von dem einen oder den mehreren Transportnetzen auf dem ersten Weiterleitungspfad ein Transportnetz innerhalb des ersten Kundennetzes und dazu konfiguriert ist, Verkehr innerhalb des ersten Kundennetzes weiterzuleiten.

3. Computerimplementiertes Verfahren nach Anspruch 1 oder 2, wobei der Weiterleitungspfad dazu konfiguriert ist, Verkehr, der von dem ersten Kundennetz übertragen wird, an ein zweites Kundennetz weiterzuleiten.

4. Computerimplementiertes Verfahren nach einem der Ansprüche 1-3, wobei das Bestimmen der Vielzahl von MTNC-IDs Folgendes umfasst:
Auswählen einer eindeutigen MTNC-ID aus verfügbaren MTNC-IDs mit einer dritten Steuerungsfunktion eines zweiten Kundennetzes und einer zweiten Steuerungsfunktion eines Transportnetzes durch die erste Steuerungsfunktion des ersten Kundennetzes, wobei die eindeutige MTNC-ID einem Weiterleitungspfad entspricht, der das Transportnetz beinhaltet.

5. Computerimplementiertes Verfahren nach einem der Ansprüche 1-4, ferner Folgendes umfassend:
Empfangen einer Anforderung, welche die erste MTNC-ID für Datenpaketübertragungen auf dem ersten Weiterleitungspfad anfordert, durch die erste Steuerungsfunktion des ersten Kundennetzes von der SMF.

6. Computerimplementiertes Verfahren nach einem der Ansprüche 1-5, wobei jede der Vielzahl von MTNC-IDs für einen entsprechenden Weiterleitungspfad und einen zugeordneten Satz von Ressourcenbereitstellungsanforderungen eindeutig ist.

7. Computerimplementiertes Verfahren nach einem der Ansprüche 1-6, ferner Folgendes umfassend:
kontinuierliches Aktualisieren der Vielzahl von MTNC-IDs durch die erste Steuerungsfunktion des ersten Kundennetzes.

8. Computerimplementiertes Verfahren, Folgendes umfassend:
Empfangen (1802) einer Multitransportnetz-Kontextkennung (MTNC-ID) durch eine erste Steuerungsfunktion eines Transportnetzes auf einem Weiterleitungspfad von einer zweiten Steuerungsfunktion eines ersten Kundennetzes, wobei die MTNC-ID dem Weiterleitungspfad entspricht und einem Satz von Ressourcenbereitstellungsanforderungen zugeordnet ist, gemäß denen Transportressourcen von jedem von einem oder mehreren Transportnetzen auf dem Weiterleitungspfad für die Verkehrsweiterleitung auf dem Weiterleitungspfad bereitgestellt werden, wobei der Satz von Ressourcenbereitstellungsanforderungen eine Dienstklassen(CoS)-Anforderung, einen Satz von Anforderungen an die Dienstqualität (QoS) und eine Isolationsanforderung umfasst;
Zuordnen (1804) der MTNC-ID durch die erste Steuerungsfunktion des Transportnetzes zu einem Transportpfad, der in dem Transportnetz gemäß dem Satz von Ressourcenbereitstellungsanforderungen, die der MTNC-ID zugeordnet sind, konfiguriert wurde; und
Programmieren (1806) von Routern des Transportnetzes mit der MTNC-ID durch die erste Steuerungsfunktion des Transportnetzes, sodass jeder Router in der Lage ist, Datenpakete, welche die MTNC-ID aufweisen, gemäß einem zugeordneten Transportpfad der MTNC-ID zu routen;
wobei die MTNC-ID auf Grundlage von Schätzungen der Verkehrsnachfrage zwischen dem ersten Kundennetz und einem zweiten Kundennetz, das auf dem Weiterleitungspfad weitergeleiteten Verkehr weiterleitet, und auf Grundlage des Satzes von Ressourcenbereitstellungsanforderungen, die der MTNC-ID zugeordnet sind, bestimmt wurde; und
ferner Folgendes umfassend:
Sammeln von Daten bezüglich Verkehr, die zwischen dem ersten Kundennetz und dem zweiten Kundennetz über ein oder mehrere Transportnetze kommuniziert werden, durch die erste Steuerungsfunktion des ersten Kundennetzes.

9. Computerimplementiertes Verfahren nach Anspruch 8, ferner Folgendes umfassend:
Empfangen von Anforderungen von der zweiten Steuerungsfunktion des ersten Kundennetzes durch die erste Steuerungsfunktion des Transportnetzes, um Transportpfade gemäß Sätzen von Ressourcenbereitstellungsanforderungen zu konfigurieren.

10. Computerimplementiertes Verfahren nach Anspruch 8 oder 9, ferner Folgendes umfassend:
Empfangen von Aktualisierungsinformationen der MTNC-ID durch die erste Steuerungsfunktion des Transportnetzes.

11. Computerimplementiertes Verfahren nach einem der Ansprüche 8-10, wobei die erste Steuerungsfunktion des Transportnetzes eine softwaredefinierte Netzsteuerung (SDN-C), des Transportnetzes ist.

12. Computerimplementiertes Verfahren nach einem der Ansprüche 8-11, wobei das erste Kundennetz ein Funkzugangsnetz oder ein mobiler Kern ist.

13. Computerprogrammprodukt, das Anweisungen umfasst, die bei Ausführung durch einen oder mehrere Prozessoren den einen oder die mehreren Prozessoren dazu veranlassen, das computerimplementierte Verfahren nach einem der Ansprüche 1-12 durchzuführen.

## Revendications

1. Procédé mis en oeuvre par ordinateur, comprenant :
la détermination (1702), par une première fonction de contrôleur d'un premier réseau client, d'une pluralité d'identifiants de contexte de réseau multi-transport, MTNC-ID, chaque identifiant de contexte de réseau multi-transport, MTNC-ID correspondant à un chemin de transfert, et étant associé à un ensemble d'exigences d'approvisionnement de ressources pour un ou plusieurs réseaux de transport sur le chemin de transfert afin de fournir des ressources de transport pour le transfert de trafic sur le chemin de transfert, dans lequel le chemin de transfert s'étend entre deux fonctions de réseau de plan de données, et dans lequel l'ensemble d'exigences d'approvisionnement de ressources comprend une classe de service, CoS, un ensemble de qualité de service, des exigences QoS et une exigence d'isolement ;
l'envoi (1704), par la première fonction de contrôleur du premier réseau client, d'un premier identifiant de contexte de réseau multi-transport, MTNC-ID de la pluralité d'identifiants de contexte de réseau multi-transport, MTNC-ID correspondant à un premier chemin de transfert à une fonction de contrôleur de transport de chacun d'un ou plusieurs réseaux de transport sur le premier chemin de transfert, pour que la fonction de contrôleur de transport associe le premier identifiant de contexte de réseau multi-transport, MTNC-ID à un ou plusieurs chemins de transport configurés dans un réseau de transport respectif ; et
l'envoi (1706), d'abord par la fonction de contrôleur du premier réseau client, du premier identifiant de contexte de réseau multi-transport, MTNC-ID de la pluralité d'identifiants de contexte de réseau multi-transport, MTNC-ID correspondant au premier chemin de transfert à une fonction de gestion de session, SMF du premier réseau client, le premier chemin de transfert s'étendant entre deux fonctions de réseau de plan de données qui sont gérées par la fonction de gestion de session, SMF ;
où la détermination de la pluralité de MTNC-ID comprend :
la détermination d'un MTNC-ID sur la base d'estimations de demande de trafic entre le premier réseau client et un second réseau client recevant du trafic transféré sur le chemin de transfert, et sur la base de l'ensemble d'exigences d'approvisionnement de ressources associé au MTNC-ID ; et comprenant en outre :
la collecte, par la première fonction de contrôleur du premier réseau client, de données concernant le trafic communiqué entre le premier réseau client et le second réseau client via un ou plusieurs réseaux de transport.

2. Procédé mis en oeuvre par ordinateur selon la revendication 1, dans lequel l'un des un ou plusieurs réseaux de transport sur le premier chemin de transfert est un réseau de transport dans le premier réseau client, et est configuré pour transférer le trafic dans le premier réseau client.

3. Procédé mis en oeuvre par ordinateur selon la revendication 1 ou 2, dans lequel le chemin de transfert est configuré pour transférer le trafic transmis du premier réseau client à un second réseau client.

4. Procédé mis en oeuvre par ordinateur selon l'une quelconque des revendications 1 à 3, dans lequel la détermination de la pluralité de MTNC-ID comprend :
la sélection, par la première fonction de contrôleur du premier réseau client, d'un MTNC-ID unique parmi les MTNC-ID disponibles avec une troisième fonction de contrôleur d'un second réseau client et une deuxième fonction de contrôleur d'un réseau de transport, le MTNC-ID unique correspondant à un chemin de transfert incluant le réseau de transport.

5. Procédé mis en oeuvre par ordinateur selon l'une quelconque des revendications 1 à 4, comprenant :
la réception, par la première fonction de contrôleur du premier réseau client de la SMF du premier réseau client, d'une demande demandant au premier MTNC-ID des transmissions de paquets de données sur le premier chemin de transfert.

6. Procédé mis en oeuvre par ordinateur selon l'une quelconque des revendications 1 à 5, dans lequel chacun de la pluralité des MTNC-ID est unique pour un chemin de transfert correspondant et un ensemble associé d'exigences d'approvisionnement de ressources.

7. Procédé mis en oeuvre par ordinateur selon l'une quelconque des revendications 1 à 6, comprenant en outre :
la mise à jour, par la première fonction de contrôleur du premier réseau client, de la pluralité de MTNC-ID en continu.

8. Procédé mis en oeuvre par ordinateur, comprenant :
la réception (1802), par une première fonction de contrôleur d'un réseau de transport sur un chemin de transfert d'une deuxième fonction de contrôleur d'un premier réseau client, d'un identifiant de contexte de réseau multi-transport, MTNC-ID, le MTNC-ID correspondant au chemin de transfert, et étant associé à un ensemble d'exigences d'approvisionnement de ressources selon lesquelles les ressources de transport de chacun d'un ou plusieurs réseaux de transport sur le chemin de transfert sont fournies pour transférer le trafic sur le chemin de transfert, dans lequel l'ensemble d'exigences d'approvisionnement de ressources comprend une classe de service, CoS, un ensemble de qualité de service, des exigences QoS et une exigence d'isolement ;
l'association (1804), par la première fonction de contrôleur du réseau de transport, du MTNC-ID à un chemin de transport qui a été configuré dans le réseau de transport selon l'ensemble d'exigences d'approvisionnement de ressources associé au MTNC-ID ; et
la programmation (1806), par la première fonction de contrôleur du réseau de transport, de routeurs du réseau de transport avec le MTNC-ID de sorte que chaque routeur soit capable d'acheminer, selon un chemin de transport associé du MTNC-ID, des paquets de données ayant le MTNC-ID ;
où le MTNC-ID a été déterminé sur la base d'estimations de demande de trafic entre le premier réseau client et un second réseau client transférant le trafic transféré sur le chemin de transfert, et sur la base de l'ensemble d'exigences d'approvisionnement de ressources associé au MTNC-ID ; et comprenant en outre :
la collecte, par la première fonction de contrôleur du premier réseau client, de données concernant le trafic communiqué entre le premier réseau client et le second réseau client via un ou plusieurs réseaux de transport.

9. Procédé mis en oeuvre par ordinateur selon la revendication 8, comprenant en outre :
la réception, par la première fonction de contrôleur du réseau de transport, de demandes de la deuxième fonction de contrôleur du premier réseau client pour configurer des chemins de transport selon des ensembles d'exigences d'approvisionnement en ressources.

10. Procédé mis en oeuvre par ordinateur selon la revendication 8 ou 9, comprenant en outre :
la réception, par la première fonction de contrôleur du réseau de transport, d'informations de mise à jour du MTNC-ID.

11. Procédé mis en oeuvre par ordinateur selon l'une quelconque des revendications 8 à 10, dans lequel la première fonction de contrôleur du réseau de transport est un contrôleur de réseau défini par logiciel, SDN-C du réseau de transport.

12. Procédé mis en oeuvre par ordinateur selon l'une quelconque des revendications 8 à 11, dans lequel le premier réseau client est un réseau d'accès radio ou un noyau mobile.

13. Produit de programme informatique comprenant des instructions qui, lorsqu'elles sont exécutées par un ou plusieurs processeurs, amènent les un ou plusieurs processeurs à exécuter le procédé mis en oeuvre par ordinateur selon l'une quelconque des revendications 1 à 12.
